# EUROPÄISCHE PATENTSCHRIFT

(11) **EP 0 943 240 B1**
(45) Veröffentlichungstag und Bekanntmachung des Hinweises auf die Patenterteilung: **14.11.2001**
(21) Anmeldenummer: 99105886.8
(22) Anmeldetag: 24.12.1992
(51) Int. Cl.: A01N 43/42

(54) **Kombinationen aus Herbiziden und pflanzenschützenden Stoffen**
Combinations of herbicides and plant protecting agents
Combinaisons d'herbicides avec des agents protecteurs de plantes

(30) Priorität: 31.12.1991 DE 4143253
(43) Veröffentlichungstag der Anmeldung: 22.09.1999
(62) Teilanmeldung aus: 92121984.6
(73) Patentinhaber: Aventis CropScience GmbH, 65929 Frankfurt am Main (DE)
(72) Erfinder: Ort, Oswald, 61479 Glashütten (DE); Willms, Lothar, 65719 Hofheim (DE); Zeiss, Hans-Joachim, 65843 Sulzbach/Ts. (DE); Müller, Stephan, 65529 Waldems (DE); Stark, Herbert, 65779 Kelkheim (DE); Schuetze, Rainer, 65510 Idstein/Ts. (DE); Bauer, Klaus, 63456 Hanau (DE); Bieringer, Hermann, 65817 Eppstein (DE)

(56) Entgegenhaltungen:
- EP-A- 0 254 222
- EP-A- 0 293 062
- EP-A- 0 298 679
- EP-A- 0 298 680
- EP-A- 0 531 271

## Beschreibung

Die Erfindung betrifft das technische Gebiet der Pflanzenschutzmittel, insbesondere Wirkstoff-Antidot-Kombinationen, die hervorragend für den Einsatz gegen Schadpflanzen in Nutzpflanzenkulturen geeignet sind.

Einige neuere herbizide Wirkstoffe haben sehr gute Wirksamkeiten und Selektivitäten und können gegen ein weites Spektrum verschiedener Unkräuter und/oder Ungräser in speziellen Kulturpflanzenbeständen wie Sojabohne, Mais, Reis oder Getreide eingesetzt werden. Andere Kulturpflanzen jedoch werden durch diese Herbizide geschädigt, so daß der Einsatz in solchen Kulturen gar nicht möglich ist oder doch nur in geringen Aufwandmengen, die nicht die optimale breite herbizide Wirksamkeit gewährleisten.

Solche Herbizide, deren Einsatzmöglichkeit beschränkt ist, sind beispielsweise einige Herbizide aus der Gruppe der 2-acylierten cyclischen 1,3-Dicarbonylverbindungen der Formel A oder deren Salze, 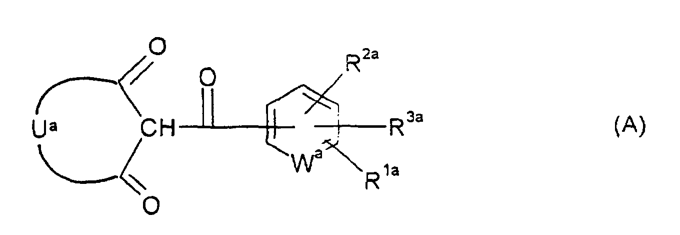 worin
- R^{1a} und R^{3a}: unabhängig voneinander Wasserstoff, Halogen, Alkyl, Alkoxy, Halogenalkyl, Halogenalkoxy, CN, NO₂, S(O)ₘR^{11a}, NR^{12a}R^{13a}, NR^{14a}C(O)R^{15a}, C(O)R^{16a} oder OCH₂CH₂OR^{21a},
- R^{2a}: Halogen, CN, NO₂, Alkyl, Alkoxy, Halogenalkyl oder Halogenalkoxy, S(O)ₚR^{10a}, -O-S(O)₂R^{10a}, N(R^{20a})-S(O)₂R^{19a},
- W^{a}: Stickstoff oder CH,
- R^{10a}: Alkyl, Halogenalkyl oder Alkoxy
- R^{11a}: Alkyl, Halogenalkyl, Phenyl oder Benzyl, wobei die letzten zwei Reste am Phenylring unsubstituiert oder substituiert sind, oder NR^{17a}R^{18a},
- R^{12a}, R^{13a}: unabhängig voneinander Wasserstoff oder Alkyl,
- R^{14a}: Alkyl oder Wasserstoff,
- R^{15a}: Alkyl oder Wasserstoff,
- R^{16a}: Wasserstoff, Alkyl, Halogenalkyl oder Alkoxy,
- R^{17a}, R^{18a}: unabhängig voneinander Wasserstoff oder Alkyl,
- R^{19a}, R^{20a}: unabhängig voneinander Alkyl oder Halogenalkyl,
- R^{21a}: Wasserstoff oder Alkyl,
- p: null oder eins und
- U^{a}: und die daran gebundene Gruppe der Formel -CO-CH-CO- zusammen einen Ring mit 5- bis 6-Ringgliedern bedeuten, der carbocyclisch oder heterocyclisch ist, und neben den beiden Oxo-Gruppen nicht substituiert oder der weiter substituiert ist,
bedeuten.

Die Herbizide der Formel A oder deren Salze sind Hemmstoffe der Chlorophyll- bzw. der Carotinoidbiosynthese in Pflanzen. Nach Behandlung der Pflanzen mit solchen Wirkstoffen zeigen sich Aufhellungen und Weißchlorosen an den Blättern, die nach und nach die ganze Pflanze erfassen und zum Absterben bringen (vergleiche Weed Technology, 1990, Vol. 4, Seiten 731-738; WSSA Abstracts, Vol. 31, 1991, Meeting WSSA Febr. 4-7, Abstr. 33, Seite 11; DE-A-4107141).

Viele Herbizide der Formel A oder deren Saize (Verbindungen A) können nicht selektiv oder zumindest nicht in ausreichend hohen Dosierungen selektiv in Getreidekulturen und/oder in Mais eingesetzt werden, weil diese Kulturpflanzen zumindest in den erwünschten Dosierungen, die für eine breite herbizide Wirksamkeit gegen Unkräuter und Ungräser erforderlich sind, geschädigt werden.

Für Verbindungen A wurde bereits der Einsatz von herbiziden Antidots (Safenern), wie z. B. Chlor- oder Bromessigsäureamiden Dichloressigsäureamiden, Thiazolidinen, N-Phenylcarbamaten, N-Phenylsulfonylcarbamaten und 1,8-Naphthalindicarbonsäureanhydrid bekannt (vgl. EP-A-298679 und EP-A-298680). In einigen Fällen kann die Kulturpflanze, wie z. B. Weizen, vor der schädigenden Wirkung der Herbizide geschützt werden (vgi EP-A-298680, Tab. X, S 48).

Ganz unerwartet haben nun experimentelle Arbeiten gezeigt, daß Kulturpflanzen, wie z. B. Weizen, Gerste, Mais oder Reis, vor unerwünschten Schäden der Herbizide der Formel A oder deren Salze (Verbindungen A) geschützt werden können, wenn sie zusammen mit bestimmten Verbindungen B2 ausgebracht werden, die als herbizide Antidots oder Safener wirken.

Gegenstand der Erfindung sind daher herbizide Mittel, welche
A) ein oder mehrere Herbizide aus der Gruppe der 2-acylierten 1,3-Dicarbonylverbindungen der genannten Formel A oder deren Salze, sowie
B) eine oder mehrere Verbindungen der Formel B2, 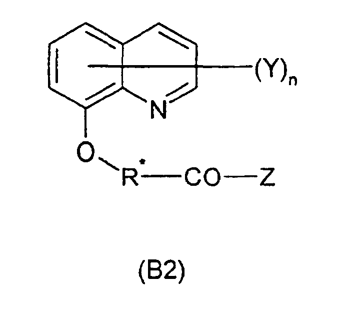 worin
   - Y: Halogen, C₁-C₄-Alkyl, C₁-C₄-Alkoxy, Nitro oder C₁-C₄-Halogenalkyl ist,
   - R: eine C₁-C₂-Alkylenkette, die noch mit ein oder zwei C₁-C₄-Alkylresten substituiert sein kann, vorzugsweise -CH₂-, ist,
   - Z: OR¹, SR¹ oder NR¹R, vorzugsweise einen Rest der Formel OR¹, NHR¹ oder N(CH₃)R¹, insbesondere der Formel OR¹ ist,
   - R: unabhängig von R¹ Wasserstoff, C₁-C₆-Alkyl, C₁-C₆-Alkoxy oder Phenyl oder substituiertes Phenyl ist, oder
   - R und R¹: gemeinsam mit dem an sie gebundenen N-Atom einen gesättigten oder ungesättigten 3- bis ⁷-gliedrigen Heterocyclus mit mindestens einem N-Atom und bis zu 3 Heteroatomen bedeuten, der unsubstituiert oder durch Reste aus der Gruppe C₁-C₄-Alkyl, C₁-C₄-Alkoxy, Phenyl oder substituiertes Phenyl substituiert ist,
   - R¹: unabhängig von R Wasserstoff, C₁-C₁₈-Alkyl, C₃-C₁₂-Cycloalkyl, C₂-C₈-Alkenyl oder C₂-C₈-Alkinyl ist,
   wobei jeder der vorstehenden C-haltigen Reste unabhängig voneinander unsubstituiert oder ein- oder mehrfach durch Reste aus der Gruppe enthaltend Halogen, Hydroxy, C₁-C₈-Alkoxy, C₁-C₈-Alkylthio, C₂-C₈-Alkenylthio, C₂-C₈-Alkinylthio, C₂-C₈-Alkenyloxy, C₂-C₈-Alkinyloxy, C₃-C₇-Cycloalkyl, C₃-C₇-Cycloalkoxy, Cyano, Mono- und Di-(C₁-C₄-alkyl)-amino, (C₁-C₈-Alkoxy)-carbonyl, (C₂-C₈-Alkenyloxy)-carbonyl, (C₁-C₈-Alkylthio)-carbonyl, (C₂-C₈-Alkinyloxy)-carbonyl, (C₁-C₈-Alkyl)-carbonyl, (C₂-C₈-Alkenyl)-carbonyl, (C₂-C₈-Alkinyl)-carbonyl, 1-(Hydroxyimino)-C₁-C₆-alkyl, 1-(C₁-C₄-Alkylimino)-C₁-C₆-alkyl, 1-(C₁-C₄-Alkoxyimino)-C₁-C₆-alkyl, (C₁-C₈-Alkyl)-carbonylamino, (C₂-C₈-Alkenyl)-carbonylamino, (C₂-C₈-Alkinyl)-carbonylamino, Aminocarbonyl, (C₁-C₈-Alkyl)-aminocarbonyl, Di-(C₁-C₆-alkyl)-aminocarbonyl, (C₂-C₆-Alkenyl)-aminocarbonyl, (C₂-C₆-Alkinyl)-aminocarbonyl, (C₁-C₈-Alkoxy)-carbonylamino, (C₁-C₈-Alkyl)-amino-carbonylamino, C₁-C₆-Alkylcarbonyloxy, das unsubstituiert oder durch Halogen, NO₂, C₁-C₄-Alkoxy oder gegebenenfalls substituiertes Phenyl substituiert ist, (C₂-C₆-Alkenyl)-carbonyloxy, (C₂-C₆-Alkinyl)-carbonyloxy, C₁-C₈-Alkylsulfonyl, Phenyl, Phenyl-C₁-C₆-alkoxy, Phenyl-(C₁-C₆-alkoxy)-carbonyl, Phenoxy, Phenoxy-C₁-C₆-alkoxy. Phenoxy-(C₁-C₆-alkoxy)-carbonyl, Phenylcarbonyloxy, Phenylcarbonylamino, Phenyl-(C₁-C₆-alkyl)-carbonylamino, wobei die letztgenannten 9 Reste im Phenylring unsubstituiert oder ein- oder mehrfach durch Reste aus der Gruppe Halogen, C₁-C₄-Alkyl, C₁-C₄-Alkoxy, C₁-C₄-Halogenalkyl, C₁-C₄-Halogenalkoxy und Nitro substituiert sind, und Reste der Formeln -SiR'₃, -OSiR'₃, (R')₃Si-C₁-C₆-alkoxy, -CO-O-NR'₂, -O-N=CR'₂, -N=CR'₂, -O-NR'₂, -CH(OR')₂ und -O-(CH₂)ₘ-CH(OR')₂, worin die R' in den genannten Formeln unabhängig voneinander Wasserstoff, C₁-C₄-Alkyl oder Phenyl, das unsubstituiert oder ein- oder mehrfach durch Reste aus der Gruppe Halogen, C₁-C₄-Alkyl, C₁-C₄-Alkoxy, C₁-C₄-Halogenalkyl, C₁-C₄-Halogenalkoxy und Nitro substituiert ist, oder paarweise eine C₂-C₆-Alkylenkette und m = 0 bis 6 bedeuten, und einen Alkoxyrest der Formel R"O-CR'''(OR")-C₁-C₆-alkoxy, worin die R" unabhängig voneinander C₁-C₄-Alkyl oder zusammen eine C₁-C₆-Alkylengruppe und R''' Wasserstoff oder C₁-C₄-Alkyl bedeuten, substituiert ist, und
   - n: eine ganze Zahl von 1 bis 5, vorzugsweise 1 bis 3 ist,
   in einer wirksamen Menge enthalten.

Von besonderem Interesse sind erfindungsgemäße herbizide Mittel, wobei in den Verbindungen der Formel B2
- R¹: Wasserstoff, C₁-C₁₂-Alkyl, C₃-C₇-Cycloalkyl, C₂-C₈-Alkenyl oder C₂-C₈-Alkinyl ist, wobei jeder der vorstehenden C-haltigen Reste unabhängig voneinander unsubstituiert oder ein- oder mehrfach durch Halogen oder ein- oder zweifach, vorzugsweise bis zu einfach durch Reste aus der Gruppe enthaltend Hydroxy, C₁-C₄-Alkoxy, C₁-C₄-Alkylthio, C₂-C₄-Alkenyloxy, C₂-C₄-Alkinyloxy, Mono- und Di-(C₁-C₂-alkyl)-amino, (C₁-C₄-Alkoxy)-carbonyl, (C₂-C₄-Alkenyloxy)-carbonyl, (C₂-C₄-Alkinyloxy)-carbonyl, (C₁-C₄-Alkyl)-carbonyl, (C₂-C₄-Alkenyl)-carbonyl, (C₂-C₄-Alkinyl)-carbonyl, 1-(Hydroxyimino)-C₁-C₄-alkyl, 1-(C₁-C₄-Alkylimino)-C₁-C₄-alkyl, 1-(C₁-C₄-Alkoxyimino)-C₁-C₄-alkyl, C₁-C₄-Alkylsulfonyl, Phenyl, Phenyl-C₁-C₄-alkoxy, Phenyl-(C₁-C₄-alkoxy)-carbonyl, Phenoxy, Phenoxy-C₁-C₄-alkoxy, Phenoxy-(C₁-C₄-alkoxy)-carbonyl, wobei die letztgenannten 6 Reste im Phenylring unsubstituiert oder ein- oder mehrfach durch Reste aus der Gruppe Halogen, C₁-C₂-Alkyl, C₁-C₂-Alkoxy, C₁-C₂-Halogenalkyl, C₁-C₂-Halogenalkoxy und Nitro substituiert sind, und Reste der Formeln -SiR'₃, -O-N=CR'₂, -N=CR'₂ und -O-NR'₂, worin die R' in den genannten Formeln unabhängig voneinander Wasserstoff, C₁-C₂-Alkyl oder Phenyl, das unsubstituiert oder ein- oder mehrfach durch Reste aus der Gruppe Halogen, C₁-C₂-Alkyl, C₁-C₂-Alkoxy, C₁-C₂-Halogenalkyl, C₁-C₂-Halogenalkoxy und Nitro substituiert ist, oder paarweise eine C₄-C₅-Alkylenkette bedeuten, substituiert ist.

Von besonderem Interesse sind auch erfindungsgemäße herbizide Mittel, wobei in den Verbindungen der Formel B2
- Y: Halogen, Methyl, Ethyl, Methoxy, Ethoxy oder C₁-C₂-Halogenalkyl, vorzugsweise Halogen oder C₁-C₂-Halogenalkyl,
bedeutet.

Bevorzugt sind erfindungsgemäße herbizide Mittel, wobei in den Verbindungen der Formel B2
- Y: Halogen oder C₁-C₄-Halogenalkyl und n eine Zahl von 1 bis 3, vorzugsweise (Y)ₙ = 5-Cl,
- Z: ein Rest der Formel OR¹,
- R*: CH₂ und
- R¹: Wasserstoff, C₁-C₈-Alkyl, C₁-C₈-Haloalkyl oder (C₁-C₄-Alkoxy)-C₁-C₄-alkyl, 1-(Hydroxyimino)-C₁-C₄-alkyl, 1-(C₁-C₄-Alkylimino)-C₁-C₃-alkyl, 1-(C₁-C₂-Alkoxyimino)-C₁-C₃-alkyl, vorzugsweise C₁-C₈-Alkyl,
bedeuten.

In den Formeln sind Alkyl, Alkenyl und Alkinyl geradkettig oder verzweigt; entsprechendes gilt für substituierte Alkyl-, Alkenyl- und Alkinylreste wie Haloalkyl, Hydroxyalkyl, Alkoxycarbonyl etc.; Alkyl bedeutet z. B. Methyl, Ethyl, n- und i-Propyl, n-, i-, t- und 2-Butyl, Pentyle, Hexyle, wie n-Hexyl, i-Hexyl und 1,3-Dimethylbutyl, Heptyle, wie n-Heptyl, 1-Methylhexyl und 1,4-Dimethylpentyl; Alkenyl bedeutet z. B. Allyl, 1-Methylprop-2-en-1-yl, But-2-en-1-yl, But-3-en-1-yl, 1-Methyl-but-3-en und 1-Methyl-but-2-en; Alkinyl bedeutet z. B. Propargyl, But-2-in-1-yl, But-3-in-1-yl, 1-Methyl-but-3-in; Halogen bedeutet Fluor, Chlor, Brom oder Iod, vorzugsweise Fluor, Chlor oder Brom, besonders Fluor oder Chlor; Haloalkyl, -alkenyl und -alkinyl bedeuten durch Halogen substituiertes Alkyl, Alkenyl bzw. Alkinyl, z. B. CF₃, CHF₂, CH₂F, CF₃CF₂, CH₂FCHCl, CCl₃, CHCl₂, CH₂CH₂Cl; Haloalkoxy ist z. B. OCF₃, OCHF₂, OCH₂F, CF₃CF₂O, CF₃CH₂O; gegebenenfalls substituiertes Phenyl ist Phenyl oder substituiertes Phenyl; substituiertes Phenyl ist Phenyl, das ein- oder mehrfach durch Reste aus der Gruppe Halogen, C₁-C₄-Alkyl, C₁-C₄-Alkoxy, C₁-C₄-Halogenalkyl, C₁-C₄-Halogenalkoxy und Nitro substituiert ist, z. B. o-, m- und p-Tolyl, Dimethylphenyle, 2-, 3- und 4-Chlorphenyl, 2-, 3- und 4-Trifluor- und -Trichlorphenyl, 2,4-, 3,5-, 2,5- und 2,3-Dichlorphenyl, o-, m- und p-Methoxyphenyl.

Die Verbindungen der Formel B2 sind aus EP-A-94349 (US-A4,902,340), EP-A-0191736 (US-A-4,881,966) und der Deutschen Patentanmeldung P 4041121.4 (EP-A-492366) und dort zitierter Literatur bekannt oder können nach oder analog den dort beschriebenen Verfahren hergestellt werden.

Als Verbindungen A eignen sich erfindungsgemäß 2-acylierte cyclische 1,3-Dicarbonylverbindungen oder deren Salze, die erst in Kombination mit Verbindungen des Typs B2 günstig in Getreidekulturen, Reis und/oder Mais eingesetzt werden können, weil sie alleine ohne Safener vom Typ B2 die Kulturpflanzen zu stark schädigen.

Von Interesse sind z. B. erfindungsgemäß einsetzbare Verbindungen der obengenannten Formel A oder deren Salze,
worin
- R^{1a} und R^{3a}: unabhängig voneinander Wasserstoff, Halogen, (C₁-C₄)-Alkyl, (C₁-C₄)-Alkoxy, (C₁-C₄)-Halogenalkyl, (C₁-C₃)-Halogen-alkoxy, CN, NO₂, S(O)ₘR^{11a}, NR^{12a}R^{13a}, NR^{14a}C(O)R^{15a}, C(O)R^{16a}, OCH₂CH₂OR^{21a},
- R^{2a}: Halogen, CN, NO₂, (C₁-C₄)-Alkyl, (C₁-C₄)-Alkoxy, (C₁-C₄)-Halogenalkyl, (C₁-C₄)-Halogenalkoxy, S(O)ₚR^{10a}, -O-S(O)₂R^{10a}, N(R^{20a})-S(O)₂R^{19a},
- W^{a}: Stickstoff oder CH,
- U^{a}: eine divalente Gruppe der Formel -X^{a}-(Y)ₙ-Z^{a}-,
- X^{a}: CR^{4a}R^{5a} oder N-R^{22a},
- Y^{a}: CR^{6a}R^{7a}, Carbonyl, Sauerstoff, Schwefel, N-R^{23a} oder C=CH₂,
- Z^{a}: CR^{8a}R^{9a}, N-R^{24a}, Sauerstoff oder Schwefel,
- R^{4a}, R^{5a}, R^{6a}, R^{7a}, R^{8a} und R^{9a}: unabhängig voneinander Wasserstoff, Halogen, Hydroxy, (C₁-C₄)-Alkyl, (C₁-C₄)-Alkylthio, [(C₁-C₄)-Alkoxy]-carbonyl, (C₃-C₆)-Cycloalkyl oder Phenyl, wobei die letztgenannten 5 kohlenwasserstoffhaltigen Reste unsubstituiert oder durch ein oder mehrere Halogenatome substituiert sind,
- R^{10a}: (C₁-C₄)-Alkyl, (C₁-C₄)-Halogenalkyl oder (C₁-C₄)-Alkoxy,
- R^{11a}: (C₁-C₄)-Alkyl, (C₁-C₄)-Halogenalkyl, Phenyl, substituiertes Phenyl, Benzyl oder NR^{17a}R^{18a},
- R^{12a},R^{13a}: unabhängig voneinander Wasserstoff oder (C₁-C₄)-Alkyl,
- R^{14a}: Wasserstoff oder (C₁-C₄)-Alkyl,
- R^{15a}: Wasserstoff oder (C₁-C₄)-Alkyl,
- R^{16a}: Wasserstoff, (C₁-C₄)-Alkyl, (C₁-C₄)-Halogenalkyl oder (C₁-C₄)-Alkoxy,
- R^{17a}, R^{18a}: unabhängig voneinander Wasserstoff oder (C₁-C₄)-Alkyl,
- R^{19a}, R^{20a}: unabhängig voneinander (C₁-C₄)-Alkyl oder (C₁-C₄)-Halogenalkyl,
- R^{21a}, R^{22a}, R^{23a} und R^{24a}: unabhängig voneinander H oder (C₁-C₄)-Alkyl und
- m, n und p: unabhängig voneinander null oder eins bedeuten.

Bevorzugt sind erfindungsgemäß einsetzbare Verbindungen der genannten Formel oder deren Salze, worin
- R^{1a} und R^{3a}: unabhängig voneinander Wasserstoff, Fluor, Chlor, Brom, lod, Cyano, Nitro, -SO₂R^{11a}, NR^{12a}R^{13a}, -N(CH₃)-C(O)R^{15a}, [(C₁-C₄)-Alkoxy]-carbonyl, (C₁-C₂)-Alkyl, (C₁-C₂)-Alkoxy, OCH₂CH₂OR^{21a}, (C₁-C₂)-Halogenalkyl, (C₁-C₂)-Halogenalkoxy oder (C₁-C₂)-Alkylthio,
- R^{2a}: Fluor, Chlor, Brom, lod, Cyano, Nitro, S(O)ₚR^{10a}, (C₁-C₃)-Alkyl, (C₁-C₂)-Alkoxy, (C₁-C₃)-Halogenalkyl oder (C₁-C₂)-Halogenalkoxy,
- U^{a}: eine divalente Gruppe der Formel -X^{a}-(Y)ₙ-Z^{a}-,
- W^{a}: Stickstoff oder CH,
- X^{a}: CR^{4a}R^{5a} oder N-R^{22a},
- Y^{a}: CR^{6a}R^{7a}, Carbonyl, Sauerstoff, Schwefel, N-R^{23a} oder C=CH₂,
- Z^{a}: CR^{8a}R^{9a}, N-R^{24a}, Sauerstoff oder Schwefel,
- R^{4a}, R^{5a}, R^{6a}, R^{7a}, R^{8a} und R^{9a}: unabhängig voneinander Wasserstoff, Fluor, Chlor, Brom, Hydroxy (C₁-C₃)-Alkyl, (C₄-C₆)-Cycloalkyl, (C₁-C₂)-Alkylthio und Phenyl, wobei die letztgenannten 4 kohlenwasserstoffhaltigen Reste unsubstituiert oder durch ein oder mehrere Halogenatome substituiert sind und
- R^{21a}, R^{22a}, R^{23a} und R^{24a}: unabhängig voneinander (C₁-C₄)-Alkyl bedeuten,
sowie R^{10a}, R^{11a}, R^{12a}, R^{13a}, R^{15a}, p und n wie oben definiert sind.

Besonders bevorzugt Verbindungen der Formel A oder deren Salze, in denen
- R^{1a} und R^{3a}: unabhängig voneinander Wasserstoff, Fluor, Chlor, Brom, Methoxy, Ethoxy, Methyl, Trifluormethoxy Difluormethoxy, OCH₃CH₃OCH₃, Nitro, Trifluormethyl, Methylthio, -SO₂CH₃, SO₂CH₂CH₃, SO₂CH₂CH₂CH₃, SO₂CH₂Cl, -N(CH₃)₂, OCH₂CH₂Cl, OCH₂CF₃, SO₂N(CH₃)₂, Ethyl, n-Propyl oder [(C₁-C₄)-Alkoxy]-carbonyl,
- R^{2a}: Fluor, Chlor, Brom, lod, Cyano Nitro, S(O)ₚR^{10a}, (C₁-C₃)-Alkyl, (C₁-C₂)-Alkoxy, (C₁-C₃)-Halogenalkyl oder (C₁-C₂)-Halogenalkoxy,
- R^{4a}, R^{5a}, R^{6a}, R^{7a}, R^{8a} und R^{9a}: unabhängig voneinander Wasserstoff, Methyl, Ethyl, Propyl, Isopropyl, Cyclopentyl, Hydroxy, Methylthio, Fluor, Chlor, Brom und Phenyl, das gegebenenfalls durch ein oder mehrere Halogenatome substituiert ist, und
- p: zwei bedeuten.

Die nachfolgenden Tabellen 1 bis 5 geben Beispiele für die oben genannten herbiziden 2-Acyl-1,3-dicarbonylverbindungen der Formel A.

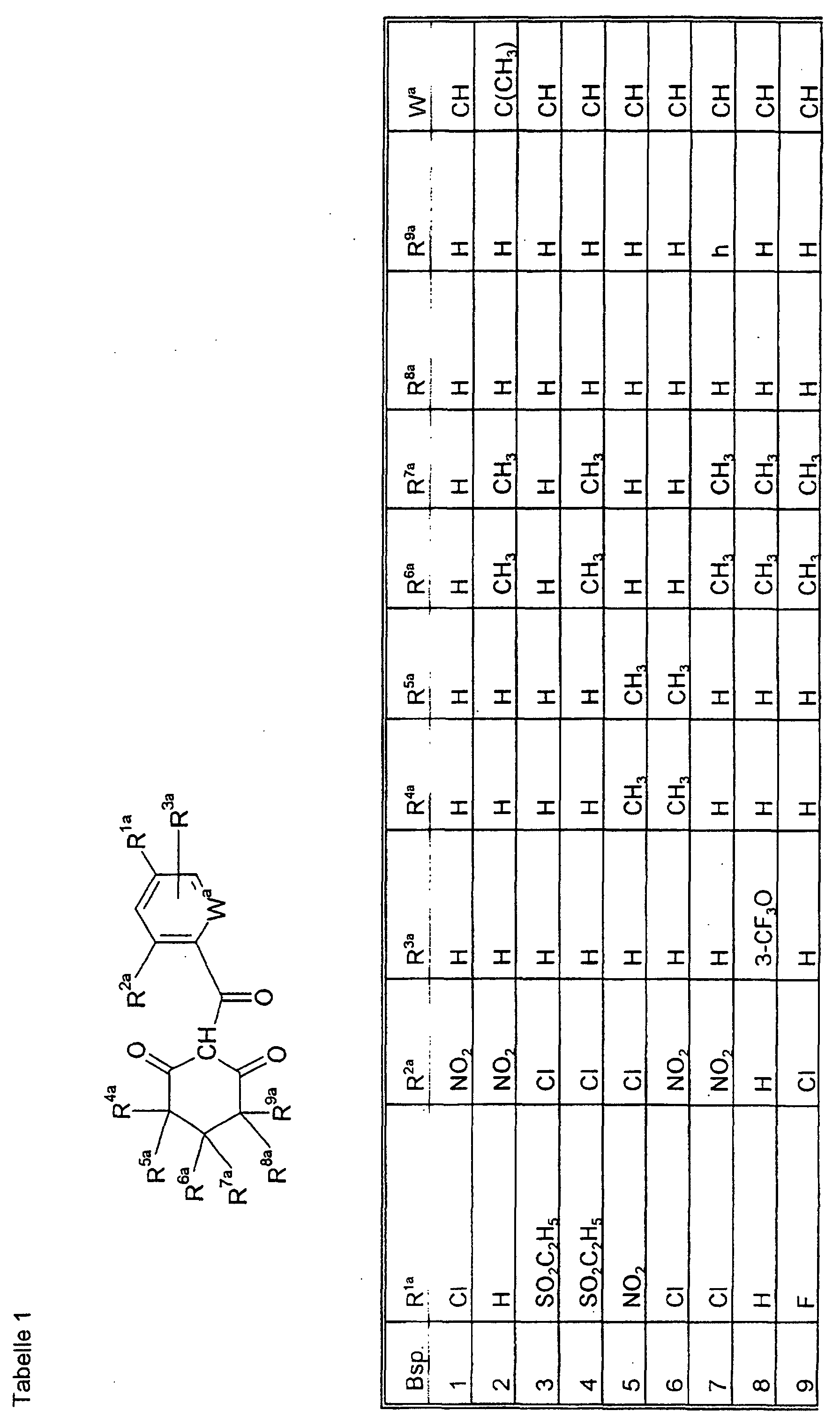

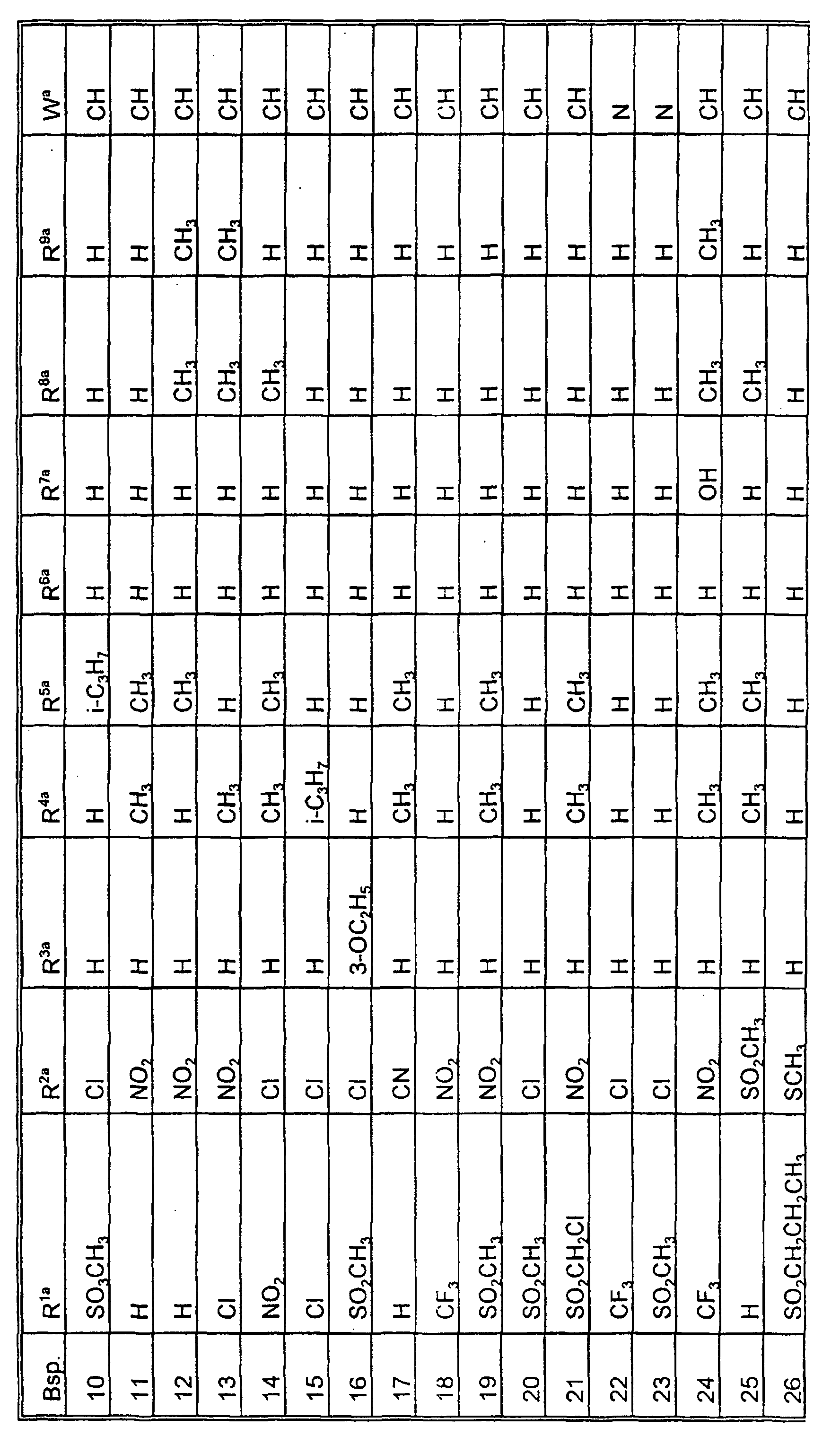

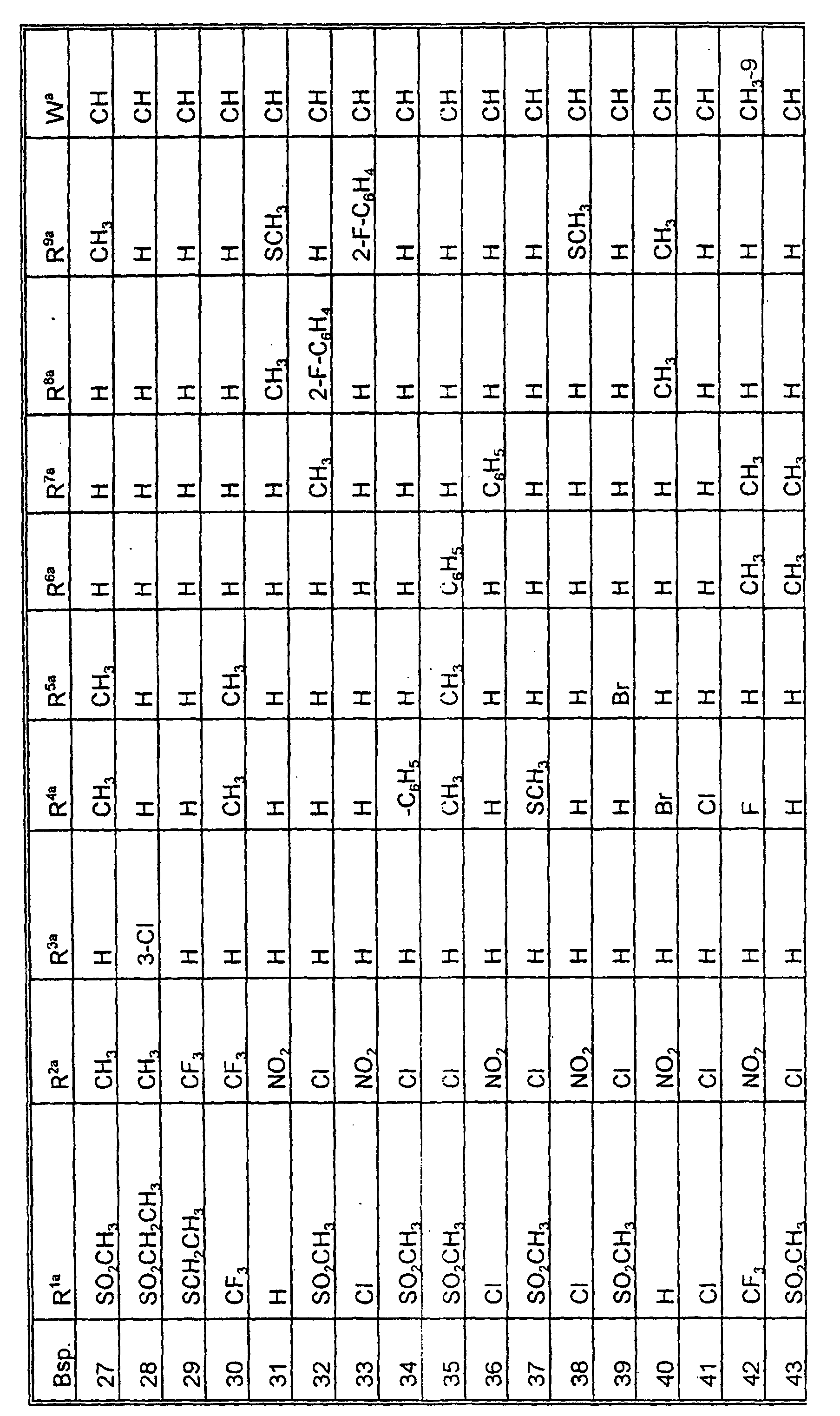

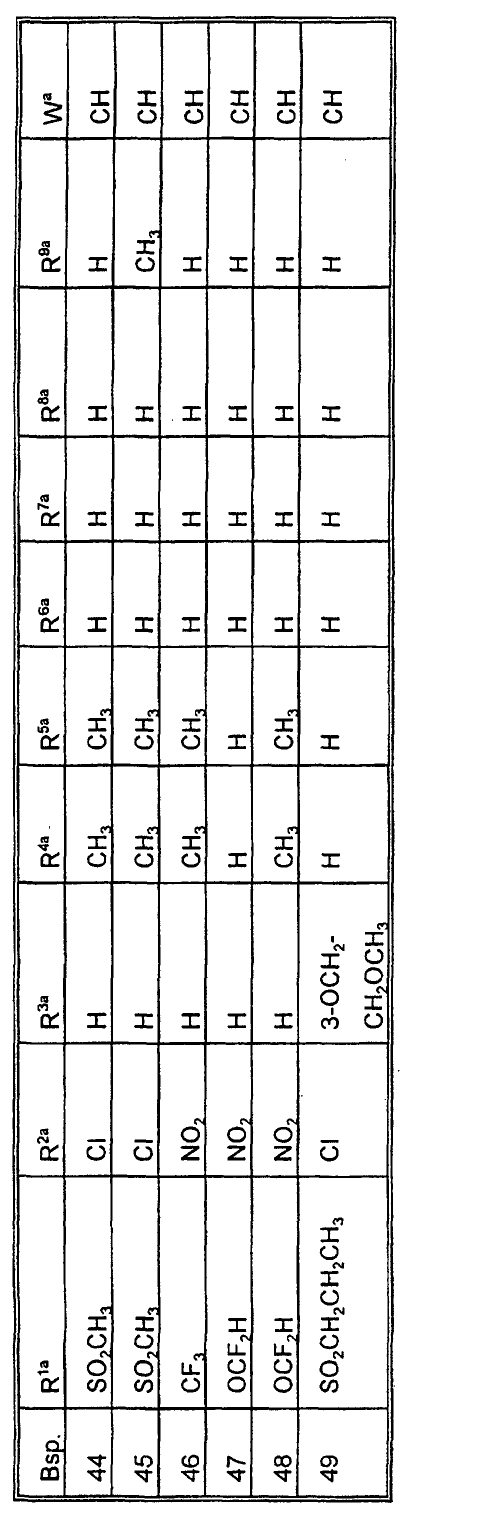

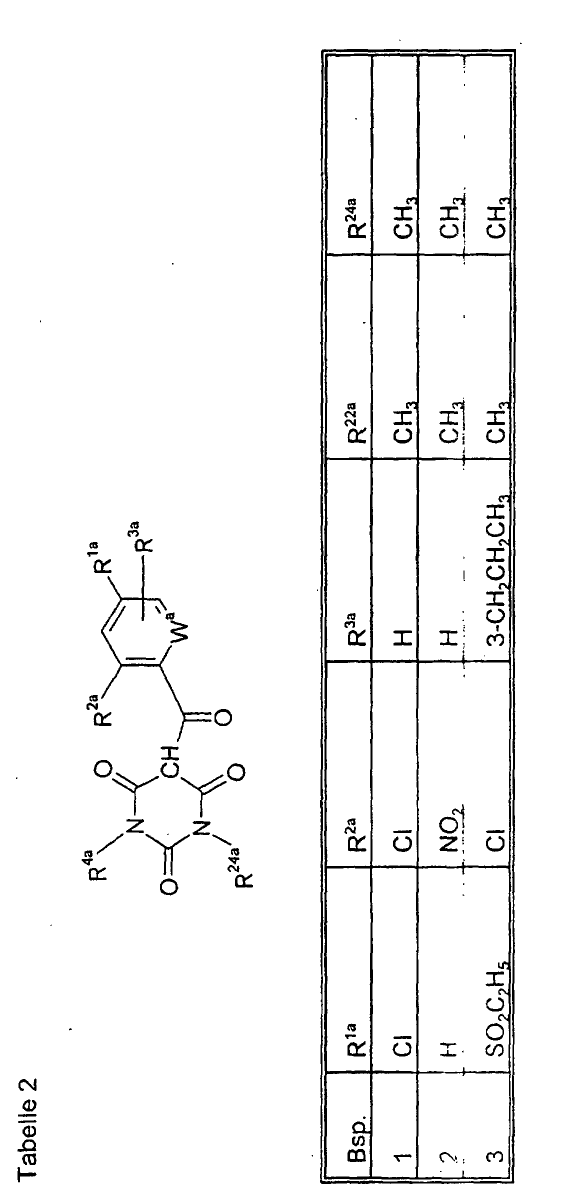

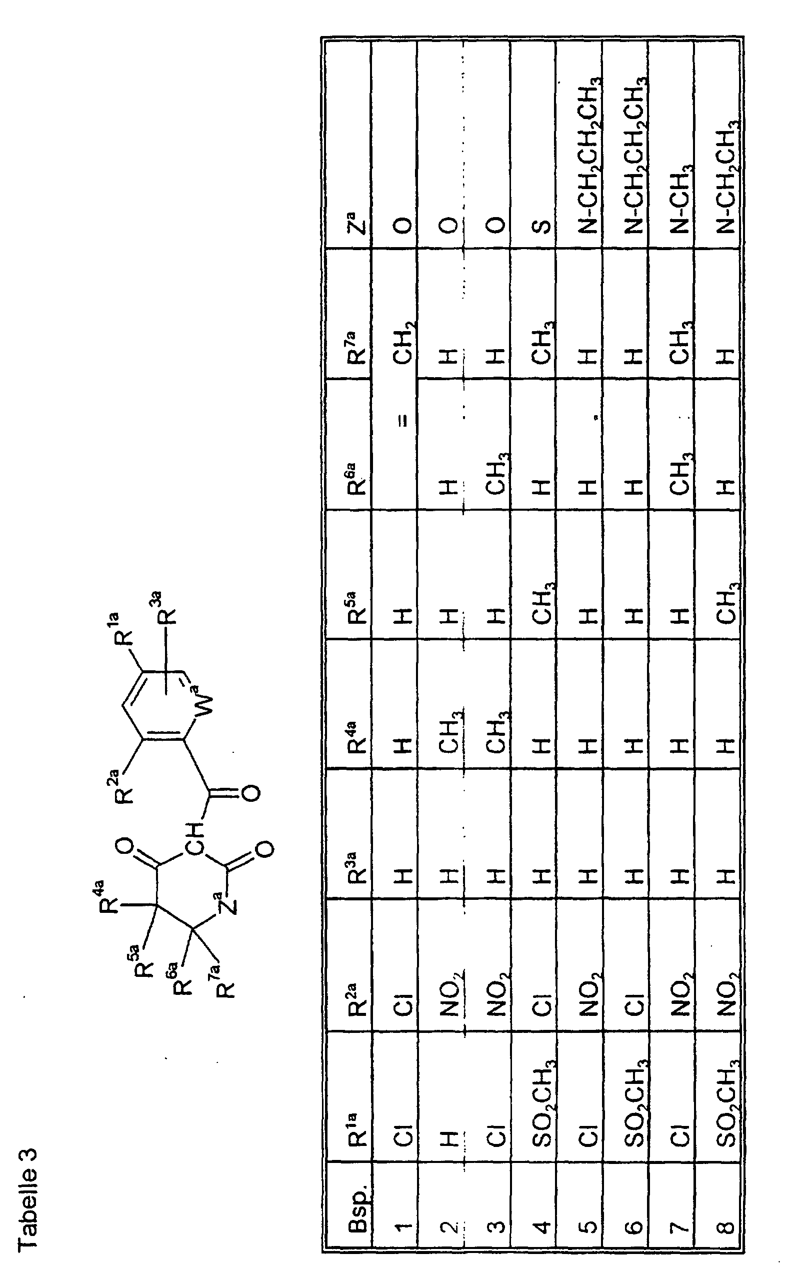

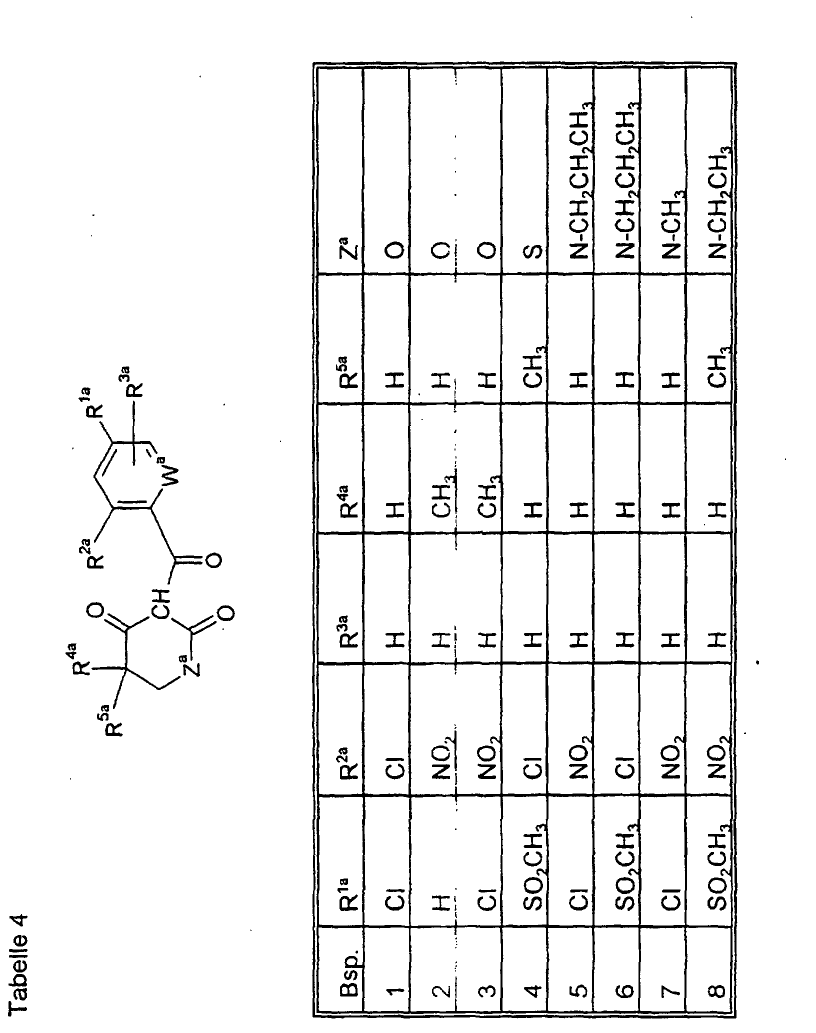

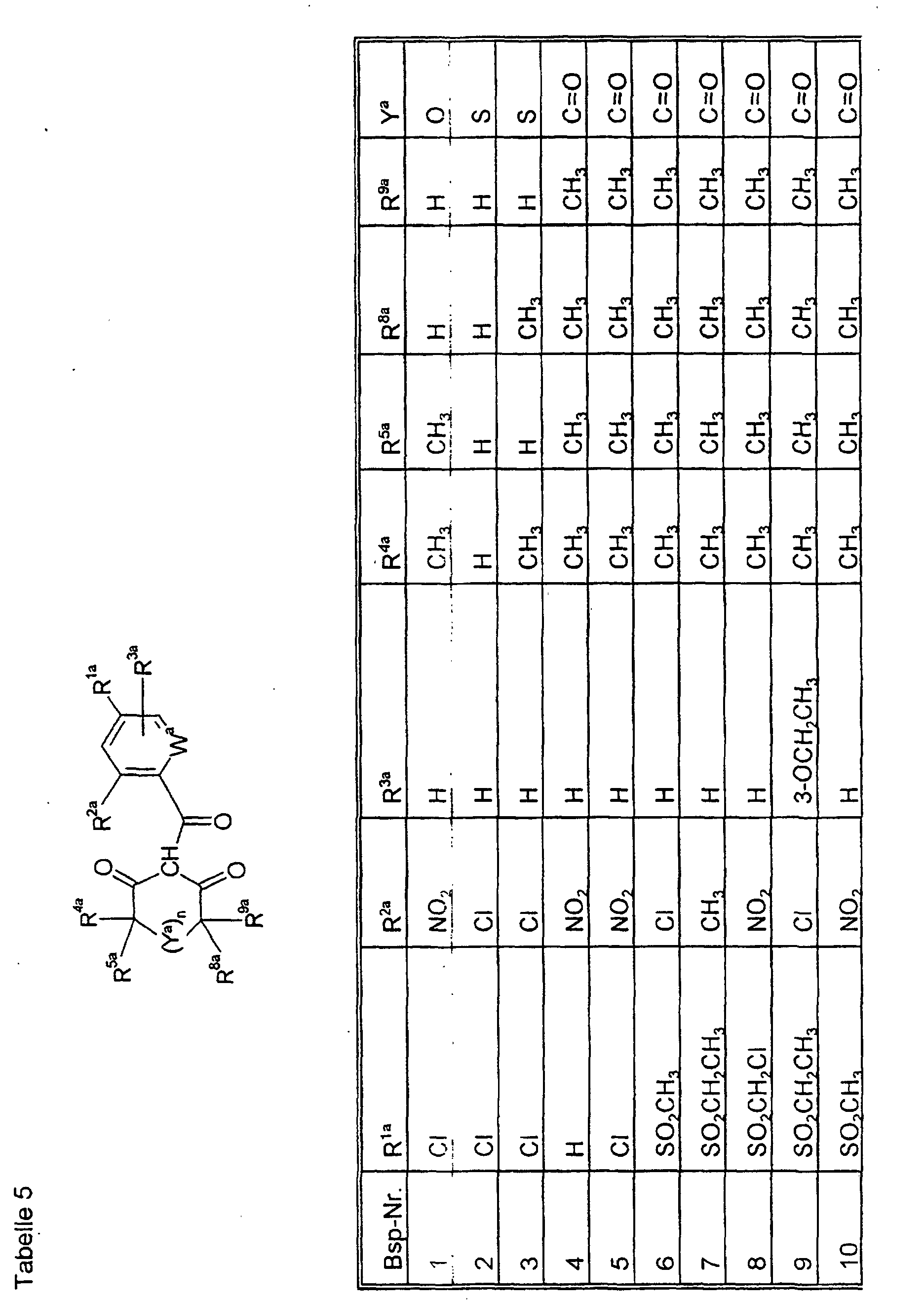

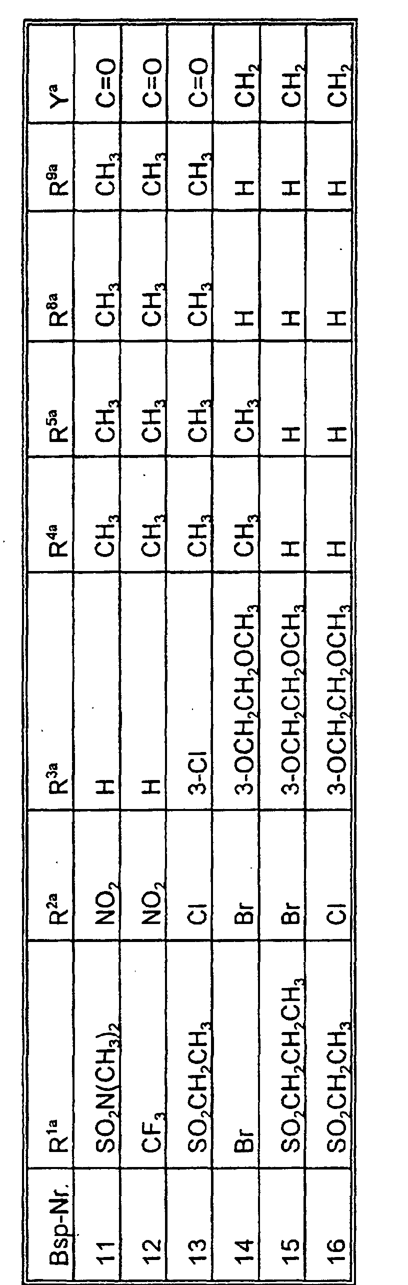

Auch Mischungen aus Verbindungen A und Sulfonylharnstoffderivaten und/oder Imidazolinonen sind erfindungsgemäß geeignet, mit den Safenern B2 eingesetzt zu werden; die Sulfonylharnstoffe und Imidazolinone dazu sind beispielsweise in der Europäischen Patentanmeldung Nr. 91121622.4 (EP-A-492366) beschrieben.

Folgende Gruppen von Verbindungen der Formel B2 sind beispielsweise als Safener für die oben erwähnten herbiziden Verbindungen A geeignet:
a) Verbindungen vom Typ der (5-Chlor-8-chinolinoxy)-essigsäure (d. h. der Formel B2, worin (Y)ₙ = 5-Cl, Z = OR¹, R^{*} = CH₂), vorzugsweise Verbindungen wie
- (B2-1): 2-(5-Chlor-8-chinolinoxy)-essigsäure-1 -methyl-hex-1-ylester,
- (B2-2): 2-(5-Chlor-8-chinolinoxy)-essigsäure-1,3-dimethyl-but-1-ylester,
- (B2-3): 2-(5-Chlor-8-chinolinoxy)-essigsäure-4-methyl-pent-2-ylester,
- (B2-4): 2-(5-Chlor-8-chinolinoxy)-essigsäure-2-heptylester,
- (B2-5): 2-(5-Chlor-8-chinolinoxy)-essigsäure-2-allyloxy-1-methyl-ethylester,
- (B2-6): 2-(5-Chlor-8-chinolinoxy)-essigsäureethylester,
- (B2-7): 2-(5-Chlor-8-chinolinoxy)-essigsäure-2-phenoxyethylester,
- (B2-8): 2-(5-Chlor-8-chinolinoxy)-essigsäure-2-methyl-1-propen-3-ylester,
- (B2-9): 2-(5-Chlor-8-chinolinoxy)-essigsäure-2-methyl-3-oxo-butylester,
- (B2-10): 2-(5-Chlor-8-chinolinoxy)-essigsäure-2-(pent-3-yliden-iminooxy)-ethylester,
- (B2-11): 2-(5-Chlor-8-chinolinoxy)-essigsäure-(2,2-dimethyl-1, 3-dioxolan-4-yl)-methylester
- (B2-12): 2-(5-Chlor-8-chinolinoxy)-essigsäure-(allyloxycarbonyl)-methylester,
- (B2-13): 2-(5-Chlor-8-chinolinoxy)-essigsäure-2-(isopropyliden-iminooxy)-ethylester,
- (B2-14): 2-(5-Chlor-8-chinolinoxy)-essigsäure-trimethylsilylmethylester,
- (B2-15): 2-(5-Chlor-8-chinolinoxy)-essigsäure-2-(trifluormethylcarbonylamino)-ethylester,
- (B2-16): 2-(5-Chlor-8-chinolinoxy)-essigsäure-2-(methoxyimino)-propylester,
- (B2-17): 2-(5-Chlor-8-chinolinoxy)-essigsäure-4-(acetoxyimino)-pentylester,
- (B2-18): 2-(5-Chlor-8-chinolinoxy)-essigsäure-2-(benzamido)-ethylester,
- (B2-19): 2-(5-Chlor-8-chinolinoxy)-essigsäure-4-(hydroxyimino)-pentylester,
- (B2-20): 2-(5-Chlor-8-chinolinoxy)-essigsäure-2-(acetoxy)-ethylester,
- (B2-21): 2-(5-Chlor-8-chinolinoxy)-essigsäure-2-(2-methyl-prop-2-en-1-yl)-ethylester,
- (B2-22): 2-(5-Chlor-8-chinolinoxy)-essigsäure-3-(propargyloxy)-propylester,
- (B2-23): 2-(5-Chlor-8-chinolinoxy)-essigsäure-dimethylamid,
- (B2-24): 2-(5-Chlor-8-chinolinoxy)-essigsäure-N-(2-acetoxy-ethyl)-amid,
- (B2-25): 2-(5-Chlor-8-chinolinoxy)-essigsäure-2-(allyloxy)-propylester
und verwandte Verbindungen, wie sie in EP-A-94 349 (US-A4,902,340), EP-A-0191736 (US-A-4,881,966) und der Deutschen Patentanmeldung P 4041121.4 (EP-A-492366) beschrieben sind.

Die Safener (Antidote) der vorstehenden Gruppe a) reduzieren oder unterbinden phytotoxische Effekte, die beim Einsatz der herbiziden Verbindungen A in Nutzpflanzenkulturen auftreten können, ohne die Wirksamkeit dieser Herbizide gegen Schadpflanzen zu beeinträchtigen. Hierdurch kann das Einsatzgebiet herkömmlicher Pflanzenschutzmittel ganz erheblich erweitert und z. B. auf Kulturen wie Weizen, Gerste, Mais und andere Gramineen-Kulturen ausgedehnt werden, in denen bisher ein Einsatz der Herbizide nicht möglich oder nur beschränkt, das heißt, in niedrigen Dosierungen mit wenig Breitenwirkung möglich war.

Die herbiziden Wirkstoffe und die erwähnten Safener können zusammen (als fertige Formulierung oder im Tank-mix-Verfahren) oder in beliebiger Reihenfolge nacheinander ausgebracht werden. Das Gewichtsverhältnis Safener:Herbizid kann innerhalb weiter Grenzen variieren und ist vorzugsweise im Bereich von 1:10 bis 10:1, insbesondere von 1:10 bis 5:1. Die jeweils optimalen Mengen an Herbizid und Safener sind vom Typ des verwendeten Herbizids oder vom verwendeten Safener sowie von der Art des zu behandelnden Pflanzenbestandes abhängig und lassen sich von Fall zu Fall durch entsprechende Vorversuche ermitteln.

Haupteinsatzgebiete für die Anwendung der Safener sind vor allem Getreidekulturen (Weizen, Roggen, Gerste, Hafer), Reis, Mais, Sorghum, aber auch Baumwolle und Sojabohne, vorzugsweise Getreide und Mais.

Die Safener vom Typ B2 können je nach ihren Eigenschaften zur Vorbehandlung des Saatgutes der Kulturpflanze (Beizung der Samen) verwendet werden oder vor der Saat in die Saatfurchen eingebracht oder zusammen mit dem Herbizid vor oder nach dem Auflaufen der Pflanzen angewendet werden. Vorauflaufbehandlung schließt sowohl die Behandlung der Anbaufläche vor der Aussaat als auch die Behandlung der angesäten, aber noch nicht bewachsenen Anbauflächen ein. Bevorzugt ist die gemeinsame Anwendung mit dem Herbizid im Nachauflaufverfahren. Hierzu können Tankmischungen oder Fertigformulierungen eingesetzt werden.

Im Vergleich zur Methode mit Saatbeizung stellt die Methode mit gemeinsamer Anwendung von Herbizid und Safener im Nachauflaufverfahren einer bedeutenden praktischen Vorteil dar. Der Landwirt spart durch einen Arbeitsgang der gemeinsamen Ausbringung wesentliche Kosten und muß vor allem keine arbeitsaufwendige Saatgutbeizung durchführen, wozu spezielles Beizgerät erforderlich ist. Der arbeitstechnische Aufwand für die zusätzliche Ausbringung des Safeners ist demgegenüber praktisch zu vernachlässigen, zumal wenn Herbizid und Safener als fertige Formulierung eingesetzt und ausgebracht werden.

Die benötigten Aufwandmengen der Safener können je nach Indikation und verwendetem Herbizid innerhalb weiter Grenzen schwanken und sind in der Regel im Bereich von 0,001 bis 5 kg, vorzugsweise 0,005 bis 0,5 kg Wirkstoff je Hektar.

Gegenstand der vorliegenden Erfindung ist deshalb auch ein Verfahren zum Schutz von Kulturpflanzen vor phytotoxischen Nebenwirkungen von herbiziden Verbindungen A, das dadurch gekennzeichnet ist, daß eine wirksame Menge einer Verbindung der genannten Formel B2 vor, nach oder gleichzeitig mit dem Herbizid A, vorzugsweise zusammen mit dem Herbizid A im Nachauflaufverfahren, auf die Pflanzen, Pflanzensamen oder die Anbaufläche appliziert wird,

Die Verbindungen B2 und deren Kombinationen mit einem oder mehreren der genannten Herbizide können auf verschiedene Art formuliert werden, je nachdem welche biologischen und/oder chemisch-physikalischen Parameter vorgegeben sind. Als Formulierungsmöglichkeiten kommen beispielsweise in Frage: Spritzpulver (WP), wasserlösliche Pulver (SP), wasserlösliche Konzentrate, emulgierbare Konzentrate (EC), Emulsionen (EW), wie Öl-in-Wasser- und Wasser-in-Öl-Emulsionen, versprühbare Lösungen, Suspensionskonzentrate (SC), Dispersionen auf Öl- oder Wasserbasis, ölmischbare Lösungen, Kapselsuspensionen (CS), Stäubemittel (DP), Beizmittel, Granulate für die Streu- und Bodenapplikation, Granulate (GR) in Form von Mikro-, Sprüh-, Aufzugs- und Adsorptionsgranulaten, wasserdispergierbare Granulate (WG), wasserlösliche Granulate (SG), ULV-Formulierungen, Mikrokapseln und Wachse.

Diese einzelnen Formulierungstypen sind im Prinzip bekannt und werden beispielsweise beschrieben in: Winnacker-Küchler, "Chemische Technologie", Band 7, C. Hauser Verlag München, 4. Aufl. 1986, Wade van Valkenburg, "Pesticide Formulations", Marcel Dekker, N.Y., 1973; K. Martens, "Spray Drying" Handbook, 3rd Ed. 1979, G. Goodwin Ltd. London.

Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluent and Carriers", 2nd Ed., Darland Books, Caldwell N.J., H.v. Olphen, "Introduction to Clay Colloid Chemistry"; 2nd Ed., J. Wiley & Sons, N.Y.; C. Marsden, "Solvents Guide"; 2nd Ed., Interscience, N.Y. 1963; McCutcheon's "Detergents and Emulsifiers Annual", MC Publ. Corp., Ridgewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesell., Stuttgart 1976; Winnacker-Küchler, "Chemische Technologie", Band 7, C. Hauser Verlag München, 4. Aufl. 1986.

Auf der Basis dieser Formulierungen lassen sich auch Kombinationen mit anderen pestizid wirksamen Stoffen, wie z.B. Insektiziden, Akariziden, Herbiziden, Fungiziden, Safenern, Düngemitteln und/oder Wachstumsregulatoren herstellen, z.B. in Form einer Fertigformulierung oder als Tankmix.

Spritzpulver sind in Wasser gleichmäßig dispergierbare Präparate, die neben dem Wirkstoff und/oder Safener außer einem Verdünnungs- oder Inertstoff noch Tenside ionischer und/oder nichtionischer Art (Netzmittei, Dispergiermittel), z.B. polyoxyethylierte Alkylphenole, polyoxethylierte Fettalkohole, polyoxethylierte Fettamine, Fettalkoholpolyglykolethersulfate, Alkansulfonate, Alkylbenzolsulfonate, ligninsulfonsaures Natrium, 2,2'-dinaphthylmethan-6,6'-disulfonsaures Natrium, dibutylnaphthalin-sulfonsaures Natrium oder auch oleoylmethyltaurinsaures Natrium enthalten. Zur Herstellung der Spritzpulver werden die herbiziden Wirkstoffe beispielsweise in üblichen Apparaturen wie Hammermühlen, Gebläsemühlen und Luftstrahlmühlen feingemahlen und gleichzeitig oder anschließend mit den Formulierungshilfsmitteln vermischt.

Emulgierbare Konzentrate werden durch Auflösen des Wirkstoffes oder Wirkstoffes und/oder Safeners in einem organischen Lösungsmittel z.B. Butanol, Cyclohexanon, Dimethylformamid, Xylol oder auch höhersiedenden Aromaten oder Kohlenwasserstoffen oder Mischungen der organischen Lösungsmittel unter Zusatz von einem oder mehreren Tensiden ionischer und/oder nichtionischer Art (Emulgatoren) hergestellt. Als Emulgatoren können beispielsweise verwendet werden: Alkylarylsulfonsaure Calzium-Salze wie Ca-dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Alkylpolyether, Sorbitanester wie z. B. Sorbitanfettsäureester oder Polyoxethylensorbitanester wie z. B. Polyoxyethylensorbitanfettsäureester.

Stäubemittel erhält man durch Vermahlen des Wirkstoffes und/oder Safeners mit fein verteilten festen Stoffen, z.B. Talkum, natürlichen Tonen, wie Kaolin, Bentonit und Pyrophyllit, oder Diatomeenerde.

Suspensionskonzentrate können auf Wasser- oder Ölbasis sein. Sie können beispielsweise durch Naß-Vermahlung mittels handelsüblicher Perlmühlen und gegebenenfalls Zusatz von Tensiden, wie sie z. B. oben bei den anderen Formulierungstypen bereits aufgeführt sind, hergestellt werden.

Emulsionen, z. B. Öl-in-Wasser-Emulsionen (EW), lassen sich beispielsweise mittels Rührern, Kolloidmühlen und/oder statischen Mischern unter Verwendung von wäßrigen organischen Lösungsmitteln und gegebenenfalls Tensiden, wie sie z. B. oben bei den anderen Formulierungstypen bereits aufgeführt sind, herstellen.

Granulate können entweder durch Verdüsen des Wirkstoffes und/oder Safeners auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden.

Wasserdisbergierbare Granulate werden in der Regel nach den üblichen Verfahren wie Sprühtrocknung, Wirbelbett-Granulierung, Teller-Granulierung, Mischung mit Hochgeschwindigkeitsmischern und Extrusion ohne festes Inertmaterial hergestellt. Zur Herstellung von Teller-, Fließbett-, Extruder- und Sprühgranulate siehe z.B. Verfahren in "Spray-Drying Handbook" 3rd ed. 1979, G. Goodwin Ltd., London; J.E. Browning, "Agglomeration", Chemical and Engineering 1967, Seiten 147 ff; "Perry's Chemical Engineer's Handbook", 5th Ed., McGraw-Hill, New York 1973, S. 8-57.

Für weitere Einzelheiten zur Formulierung von Pflanzenschutzmitteln siehe z.B. G.C. Klingman, "Weed Control as a Science", John Wiley and Sons, Inc., New York, 1961, Seiten 81-96 und J.D. Freyer, S.A. Evans, "Weed Control Handbook", 5th Ed., Blackwell Scientific Publications, Oxford, 1968, Seiten 101-103.

Die agrochemischen Zubereitungen enthalten in der Regel 0,1 bis 99 Gew.-%, insbesondere 0,1 bis 95 Gew.-%, Wirkstoff der Formel (I).

In Spritzpulvern beträgt die Wirkstoffkonzentration z.B. etwa 10 bis 90 Gew.-%, der Rest zu 100 Gew.-% besteht aus üblichen Formulierungsbestandteilen. Bei emulgierbaren Konzentraten kann die Wirkstoffkonzentration etwa 1 bis 90, vorzugsweise 5 bis 80 Gew.-% betragen. Staubförmige Formulierungen enthalten 1 bis 30, vorzugsweise meistens 5 bis 20 Gew.-% an Wirkstoff. versprühbare Lösungen etwa 0,05 bis 80, vorzugsweise 2 bis 50 Gew.-% Wirkstoff. Bei wasserdispergierbaren Granulaten hängt der Wirkstoffgehalt zum Teil davon ab, ob die wirksame Verbindung flüssig oder fest vorliegt und welche Granulierhilfsmittel, Füllstoffe usw. verwendet werden. Bei den in Wasser dispergierbaren Granulaten liegt der Gehalt an Wirkstoff beispielsweise zwischen 1 und 95 Gew.-%, vorzugsweise zwischen 10 und 80 Gew.-% .

Daneben enthalten die genannten Wirkstofformulierungen gegebenenfalls die jeweils üblichen Haft-, Netz-, Dispergier-, Emulgier-, Penetrations-, Konservierungs-, Frostschutz- und Lösungsmittel, Füll-, Träger- und Farbstoffe, Entschäumer, Verdunstungshemmer und den pH-Wert und die Viskosität beeinflussende Mittel.

Zur Anwendung werden die in handelsüblicher Form vorliegenden Formulierungen gegebenenfalls in üblicher Weise verdünnt, z.B. bei Spritzpulvern, emulgierbaren Konzentraten, Dispersionen und wasserdispergierbaren Granulaten mittels Wasser. Staubförmige Zubereitungen, Granulate sowie versprühbare Lösungen werden vor der Anwendung üblicherweise nicht mehr mit weiteren inerten Stoffen verdünnt. Besonders gute Wirksamkeiten der erfindungsgemäßen Mittel können erzielt werden, wenn zusätzlich zu den in den Formulierungen enthaltenen Tensiden weitere Netzmittel in Konzentrationen von 0,1 bis 0,5 Gew.-% im Tank-mix-Verfahren zugesetzt werden, z. B. nichtionische Netzmittel oder Netzmittel vom Typ der Fettalkoholpolyolethersulfate (siehe z. B. DE-A-4029304 = EP-A-0476555 oder ZA-91/7266).

Mit den äußeren Bedingungen wie Temperatur, Feuchtigkeit, der Art des verwendeten Herbizids u.a. variiert die erforderliche Aufwandmenge der "Safener".

### A. Formulierungsbeispiele

a) Ein Stäubmittel wird erhalten, indem man 10 Gew.-Teile einer Verbindung des Typs B2 oder eines Wirkstoffgemischs aus einer herbiziden Verbindung A und einem Safener vom Typ B2 und 90 Gew.-Teile Talkum als Inertstoff mischt und in einer Schlagmühle zerkleinert.
b) Ein in Wasser leicht dispergierbares, benetzbares Pulver wird erhalten, indem man 25 Gewichtsteile einer Verbindung des Typs B2 oder eines Wirkstoffgemischs aus einem Herbizid A und einem Safener vom Typ B, 64 Gewichtsteile kaolinhaltigen Quarz als Inertstoff, 10 Gewichtsteile ligninsulfonsaures Kalium und 1 Gew.-Teil oleoylmethyltaurinsaures Natrium als Netz- und Dispergiermittel mischt und in einer Stiftmühle mahlt.
c) Ein in Wasser leicht dispergierbares Dispersionskonzentrat wird erhalten, indem man 20 Gewichtsteile einer Verbindung des Typs B2 oder eines Wirkstoffgemischs aus einem Herbizid A und einem Safener vom Typ B, 6 Gew.-Teilen Alkylphenolpolyglykolether (® Triton X 207), 3 Gew.-Teilen Isotridecanolpolyglykolether (8 EO) und 71 Gew.- Teilen paraffinischem Mineralöl (Siedebereich z.B. ca. 255 bis über 277°C) mischt und in einer Reibkugelmühle auf eine Feinheit von unter 5 Mikron vermahlt.
d) Ein emulgierbares Konzentrat wird erhalten aus 15 Gew.-Teilen einer Verbindung des Typs B2 oder eines Wirkstoffgemischs aus einem Herbizid A und einem Safener B, 75 Gew.Teilen Cyclohexanon als Lösemittel und 10 Gew.-Teilen oxethyliertes Nonylphenol als Emulgator.
e) Ein in Wasser dispergierbares Granulat wird erhalten, indem man

| | |
|---|---|
| 75 Gew.-Teile | einer Verbindung B2 oder eines Wirkstoffgemischs aus Herbizid A und einem Safener B, |
| 10 " | ligninsulfonsaures Calcium, |
| 5 " | Natriumlaurylsulfat, |
| 3 " | Polyvinylalkohol und |
| 7 " | Kaolin |

mischt, auf einer Stiftmühle mahlt und das Pulver in einem Wirbelbett durch Aufsprühen von Wasser als Granulierflüssigkeit granuliert.
f) Ein in Wasser dispergierbares Granulat wird auch erhalten, indem man

| | |
|---|---|
| 25 Gew.-Teile | einer Verbindung B2 oder eines Wirkstoffgemischs aus einem Herbizid A und einem Safener B, |
| 5 " | 2,2'-dinaphthylmethan-6,6'-disulfonsaures Natrium, |
| 2 " | oleoylmethyltaurinsaures Natrium, |
| 1 Gew.-Teil | Polyvinylalkohol, |
| 17 Gew.-Teile | Calciumcarbonat und |
| 50 " | Wasser |

auf einer Kolloidmühle homogensiert und vorzerkleinert, anschließend auf einer Perlmühle mahlt und die so erhaltene Suspension in einem Sprühturm mittels einer Einstoffdüse zerstäubt und trocknet.

### B. Biologische Beispiele

Die Kulturpflanzen, Unkräuter und Ungräser wurden im Freiland oder im Gewächshaus in Plastiktöpfen bis zum 4- bis 5-Blattstadium herangezogen und dann erfindungsgemäß mit Verbindungen vom Typ A) und B) im Nachauflaufverfahren behandelt. Die Verbindungen vom Typ A) und B) wurden dabei in Form wäßriger Suspensionen bzw. Emulsionen mit einer Wasseraufwandmenge von umgerechnet 300 l/ha ausgebracht. 4 Wochen nach der Behandlung wurden die Pflanzen visuell auf jede Art von Schädigung durch die ausgebrachten Herbizide bonitiert, wobei insbesondere das Ausmaß der anhaltenden Pflanzenschädigung berücksichtigt wurde. Die Bewertung erfolgte in Prozentwerten im Vergleich zu unbehandelten Kontrollen.

Die Ergebnisse der folgenden Tabellen 6 und 7 veranschaulichen, daß die erfindungsgemäßen eingesetzten Verbindungen vom Typ B2 starke Herbizidschäden an Kulturpflanzen effektiv reduzieren können. Selbst bei starken Überdosierungen der Herbizide werden bei den Kulturpflanzen auftretende schwere Schädigungen deutlich reduziert und geringere Schäden völlig aufgehoben. Mischungen aus Herbiziden und Verbindungen vom Typ B2 eignen sich deshalb in ausgezeichneter Weise zur selektiven Unkrautbekämpfung in Kulturen wie Getreide und Mais.

**Tabelle 6:**

| Gewächshausversuch | | | | | |
|---|---|---|---|---|---|
| | | | % Schädigung an Kulturpflanzen und Unkräutern | | |
| Herbizid [Tab./Nr.] | Safener | Dosis [g AS/ha] | Weizen | APSV | GAAP |
| Tab. 1, | | | | | |
| Bsp. Nr. 20 | - | 1000 | 60 | 93 | 99 |
| | | 500 | 55 | 70 | 99 |
| | | 250 | 30 | 60 | 85 |
| | | 125 | 10 | 50 | 75 |
| Tab. 1, | | | | | |
| Bsp. 20 + | B2-1 | 1000 + 1000 | 0 | 90 | 97 |
| | | 500 + 500 | 0 | 85 | 94 |
| | | 250 + 250 | 0 | 80 | 90 |
| | | 125 + 125 | 0 | 60 | 75 |

Bsp. von Tab. 1, Nr. 20: 2-[2-Chlor-4-(methylsulfonyl)-benzoyl]-1,3-cyclohexandion
- Versuchsbedingungen:: Gewächshausversuch; Pflanzenstadien: 4 Blätter bzw. 2 Blattquirle bei GAAP.
- APSV =: Apera spica venti = Windhalm
- GAAP =: Galium aparine = Klettenlabkraut

**Tabelle 7:**

| Topfversuch unter Freilandbedingungen | | | | | |
|---|---|---|---|---|---|
| Herbizid | Safener [g AS/ha] | Dosis | Weizen | Gerste | Mais |
| Tab. 1, | | | | | |
| Bsp.-Nr. 47 | - | 1000 | 70 | 50 | 70 |
| | | 500 | 50 | 30 | 60 |
| | | 250 | 30 | 20 | 50 |
| | | 125 | 20 | 10 | 30 |
| | | | | | |
| " | + B2-2 | 1000+ 1000 | 20 | 20 | 30 |
| | | 500+ 250 | 5 | 10 | 10 |
| | | 250+ 125 | 0 | 0 | 0 |
| | | 125+ 620 | 0 | 0 | 0 |
| Tab. 1, | | | | | |
| Bsp.-Nr. 48 | - | 1000 | 90 | 80 | 95 |
| | | 500 | 80 | 70 | 90 |
| | | 250 | 70 | 60 | 80 |
| | | 125 | 60 | 50 | 70 |
| | | | | | |
| " | + B2-1 | 1000+ 500 | 30 | 40 | 30 |
| | | 500+ 250 | 10 | 20 | 5 |
| | | 250+ 125 | 0 | 0 | 0 |
| | | 125+ 62 | 0 | 0 | 0 |
| Versuchsbedingungen: 13 cm Topf im Freiland; Getreidestadium: Anfang der Bestockung; Maisstadium: 4 Blätter; Bonitur: 4 Wochen nach Behandlung. | | | | | |

## Patentansprüche

1. Herbizide Mittel, **dadurch gekennzeichnet, daß** sie
A) ein oder mehrere Herbizide aus der Gruppe der 2-acylierten 1,3-Dicarbonylverbindungen der Formel A oder deren Salze, 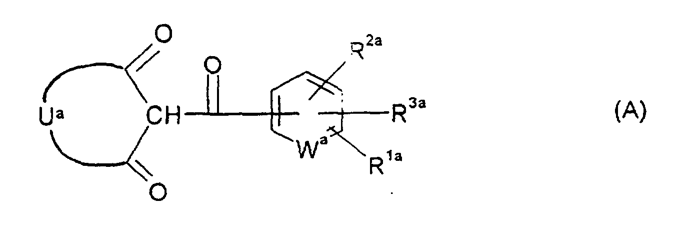 worin
R^{1a} und R^{3a} unabhängig voneinander Wasserstoff, Halogen, Alkyl, Alkoxy, Halogenalkyl, Halogenalkoxy, CN, NO₂, S(O)ₘR^{11a}, NR^{12a}R^{13a}, NR^{14a}C(O)R^{15a}, C(O)R^{16a} oder OCH₂CH₂OR^{21a},
R^{2a} Halogen, CN, NO₂, Alkyl, Alkoxy, Halogenalkyl oder Halogenalkoxy, S(O)ₚR^{10a}, -O-S(O)₂R^{10a}, N(R^{20a})-S(O)₂R^{19a},
W^{a} Stickstoff oder CH,
R^{10a} Alkyl, Halogenalkyl oder Alkoxy,
R^{11a} Alkyl, Halogenalkyl, Phenyl oder Benzyl, wobei die letzten zwei Reste am Phenylring unsubstituiert oder substituiert sind, oder NR^{17a}R^{18a},
R^{12a}, R^{13a} unabhängig voneinander Wasserstoff oder Alkyl,
R^{14a} Wasserstoff oder Alkyl,
R^{15a} Wasserstoff oder Alkyl,
R^{16a} Wasserstoff, Alkyl, Halogenalkyl oder Alkoxy,
R^{17a}, R^{18a} unabhängig voneinander Wasserstoff oder Alkyl,
R^{19a}, R^{20a} unabhängig voneinander Alkyl oder Halogenalkyl,
R^{21a} Wasserstoff oder Alkyl,
m und p unabhängig voneinander null, eins oder zwei und
U^{a} und die daran gebundene Gruppe der Formel -CO-CH-CO- zusammen einen Ring mit 5- bis 6-Ringgliedern bedeuten der carbocyclisch oder heterocyclisch ist, und neben den beiden Oxo-Gruppen nicht substituiert oder der weiter substituiert ist, bedeuten, und
B) eine oder mehrere Verbindungen der Formel B2, 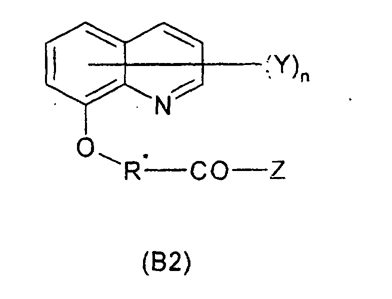 worin
Y Halogen, C₁-C₄-Alkyl, C₁-C₄-Alkoxy, Nitro oder C₁-C₄-Halogenalkyl ist, R* eine C₁-C₂-Alkylenkette, die noch mit ein oder zwei C₁-C₄-Alkylresten substituiert sein kann, vorzugsweise -CH₂- ist,
Z OR¹, SR¹ oder NR¹R, vorzugsweise einen Rest der Formel OR¹, NHR¹ oder N(CH₃)R¹, insbesondere der Formel OR¹ ist,
R unabhängig von R¹ Wasserstoff, C₁-C₆-Alkyl, C₁-C₆-Alkoxy oder Phenyl oder substituiertes Phenyl ist oder
R und R¹ gemeinsam mit dem an sie gebundenen N-Atom einen gesättigten oder ungesättigten 3- bis 7-gliedrigen Heterocyclus mit mindestens einem N-Atom und bis zu 3 Heteroatomen bedeuten, der unsubstituiert oder durch Reste aus der Gruppe C₁-C₄-Alkyl, C₁-C₄-Alkoxy, Phenyl oder substituiertes Phenyl substituiert ist,
R¹ unabhängig von R Wasserstoff, C₁-C₁₈-Alkyl, C₃-C₁₂-Cycloalkyl, C₂-C₈-Alkenyl oder C₂-C₈-Alkinyl ist,
wobei jeder vorstehenden C-haltigen Reste unabhängig voneinander unsubstituiert oder ein- oder mehrfach durch Reste aus der Gruppe enthaltend Halogen, Hydroxy, C₁-C₈-Alkoxy, C₁-C₈-Alkylthio, C₂-C₈-Alkenylthio, C₂-C₈-Alkinylthio, C₂-C₈-Alkenyloxy, C₂-C₈-Alkinyloxy, C₃-C₇-Cycloalkyl, C₃-C₇-Cycloalkoxy, Cyano, Mono- und Di-(C₁-C₄-alkyl)-amino, (C₁-C₈-Alkoxy)-carbonyl, (C₂-C₈-Alkenyloxy)-carbonyl, (C₁-C₈-Alkylthio)-carbonyl, (C₂-C₈-Alkinyloxy)-carbonyl, (C₁-C₈-Alkyl)-carbonyl, (C₂-C₈-Alkenyl)-carbonyl, (C₂-C₈-Alkinyl)-carbonyl, 1-(Hydroxyimino)-C₁-C₆-alkyl, 1-(C₁-C₄-Alkylimino)-C₁-C₆-alkyl, 1-(C₁-C₄-Alkoxyimino)-C₁-C₆-alkyl, (C₁-C₈-Alkyl)-carbonylamino, (C₂-C₈-Alkenyl)-carbonylamino, (C₂-C₈-Alkinyl)-carbonylamino, Aminocarbonyl, (C₁-C₈-Alkyl)-aminocarbonyl, Di-(C₁-C₆-alkyl)-aminocarbonyl, (C₂-C₆-Alkenyl)-aminocarbonyl, (C₂-C₆-Alkinyl)-aminocarbonyl, (C₁-C₈-Alkoxy)-carbonylamino, (C₁-C₈-Alkyl)-amino-carbonylamino, C₁-C₆-Alkylcarbonyloxy, das unsubstituiert oder durch Halogen, NO₂, C₁-C₄-Alkoxy oder gegebenenfalls substituiertes Phenyl substituiert ist, (C₂-C₆-Alkenyl)-carbonyloxy, (C₂-C₆-Alkinyl)-carbonyloxy, C₁-C₈-Alkylsulfonyl, Phenyl, Phenyl-C₁-C₆-alkoxy, Phenyl-(C₁-C₆-alkoxy)-carbonyl, Phenoxy, Phenoxy-C₁-C₆-alkoxy, Phencxy-(C₁-C₆-alkoxy)-carbonyl, Phenylcarbonyloxy, Phenylcarbonylamino, Phenyl-(C₁-C₆-alkyl)-carbonylamino, wobei die letztgenannten 9 Reste im Phenylring unsubstituiert oder ein- oder mehrfach durch Reste aus der Gruppe Halogen, C₁-C₄-Alkyl, C₁-C₄-Alkoxy, C₁-C₄-Halogenalkyl, C₁-C₄-Halogenalkoxy und Nitro substituiert sind, und Reste der Formeln -SiR'₃, -O-SiR'₃, (R')₃Si-C₁-C₆-alkoxy, -CO-O-NR'₂, -O-N=CR'₂, -N=CR'₂, -O-NR'₂, -CH(OR')₂ und -O-(CH₂)ₘ-CH(OR')₂, worin die R' in den genannten Formeln unabhängig voneinander Wasserstoff, C₁-C₄-Alkyl oder Phenyl, das unsubstituiert oder ein- oder mehrfach durch Reste aus der Gruppe Halogen, C₁-C₄-Alkyl, C₁-C₄-Alkoxy, C₁-C₄-Halogenalkyl, C₁-C₄-Halogenalkoxy und Nitro substituiert ist, oder paarweise eine C₂-C₆-Alkylenkette und m = 0 bis 6 bedeuten, und einen Alkoxyrest der Formel R"O-CR'''(OR")-C₁-C₆-alkoxy, worin die R" unabhängig voneinander C₁-C₄-Alkyl oder zusammen eine C₁-C₆-Alkylengruppe und R"' Wasserstoff oder C₁-C₄-Alkyl bedeuten, substituiert ist, und
n eine ganze Zahl von 1 bis 5 ist,
in einer wirksamen Menge enthalten.

2. Mittel nach Anspruch 1, **dadurch gekennzeichnet, daß**
R¹ Wasserstoff, C₁-C₁₂-Alkyl, C₃-C₇-Cycloalkyl C₂-C₈-Alkenyl oder C₂-C₈-Alkinyl ist, wobei jeder der vorstehenden C-haltigen Reste unabhängig voneinander unsubstituiert oder ein- oder mehrfach durch Halogen oder ein- oder zweifach, vorzugsweise bis zu einfach durch Reste aus der Gruppe enthaltend Hydroxy, C₁-C₄-Alkoxy, C₁-C₄-Alkylthio, C₂-C₄-Alkenyloxy, C₂-C₄-Alkinyloxy, Mono- und Di-(C₁-C₂-alkyl)-amino, (C₁-C₄-Alkoxy)-carbonyl, (C₂-C₄-Alkenyloxy)-carbonyl, (C₂-C₄-Alkinyloxy)-carbonyl, (C₁-C₄-Alkyl)-carbonyl, (C₂-C₄-Alkenyl)-carbonyl, (C₂-C₄-Alkinyl)-carbonyl, 1-(Hydroxyimino)-C₁-C₄-alkyl, 1-(C₁-C₄-Alkylimino)-C₁-C₄-alkyl, 1-(C₁-C₄-Alkoxyimino)-C₁-C₄-alkyl, C₁-C₄-Alkylsulfonyl, Phenyl, Phenyl-C₁-C₄-alkoxy, Phenyl-(C₁-C₄-alkoxy)-carbonyl, Phenoxy, Phenoxy-C₁-C₄-alkoxy, Phenoxy-(C₁-C₄-alkoxy)-carbonyl, wobei die letztgenannten 6 Reste im Phenylring unsubstituiert oder ein- oder mehrfach durch Reste aus der Gruppe Halogen, C₁-C₂-Alkyl, C₁-C₂-Alkoxy, C₁-C₂-Halogenalkyl, C₁-C₂-Halogenalkoxy und Nitro substituiert sind, und Reste der Formeln -SiR'₃, -O-N=CR'₂, -N=CR'₂ und -O-NR'₂, worin die R' in den genannten Formeln unabhängig voneinander Wasserstoff, C₁-C₂-Alkyl oder Phenyl, das unsubstituiert oder ein- oder mehrfach durch Reste aus der Gruppe Halogen, C₁-C₂-Alkyl, C₁-C₂-Alkoxy, C₁-C₂-Halogenalkyl, C₁-C₂-Halogenalkoxy und Nitro substituiert ist, oder paarweise eine C₄-C₅-Alkylenkette bedeuten, substituiert ist.

3. Mittel nach Anspruch 1 oder 2, **dadurch gekennzeichnet, daß**
Y Halogen, Methyl, Ethyl, Methoxy, Ethoxy oder C₁-C₂-Halogenalkyl, vorzugsweise Halogen oder C₁-C₂-Halogenalkyl, bedeutet.

4. Mittel nach nach Anspruch 1 oder 2, **dadurch gekennzeichnet, daß**
Y Halogen oder C₁-C₄-Halogenalkyl,
n eine Zahl von 1 bis 3,
Z ein Rest der Formel OR¹,
R^{*} CH₂ und
R¹ Wasserstoff, C₁-C₈-Alkyl, C₁-C₈-Haloalkyl oder (C₁-C₄-Alkoxy)-C₁-C₄-alkyl, 1-(Hydroxyimino)-C₁-C₄-alkyl, 1-(C₁-C₄-Alkylimino)-C₁-C₃-alkyl, 1-(C₁-C₂-Alkoxyimino)-C₁-C₃-alkyl,
bedeuten.

5. Mittel nach einem der Ansprüche 1 bis 4, **dadurch gekennzeichnet, daß** in Formel A
R^{1a} und R^{3a} unabhängig voneinander Wasserstoff, Halogen, (C₁-C₄)-Alkyl, (C₁-C₄)-Alkoxy, (C₁-C₄)-Halogenalkyl, (C₁-C₃)-Halogen-alkoxy, CN, NO₂, S(O)ₘR^{11a}, NR^{12a}R^{13a}, NR^{14a}C(O)R^{15a}, C(O)R^{16a}, OCH₂CH₂OR^{21a},
R^{2a} Halogen, CN, NO₂, (C₁-C₄)-Alkyl, (C₁-C₄)-Alkoxy, (C₁-C₄)-Halogenalkyl, (C₁-C₄)-Halogenalkoxy, S(O)ₚR^{10a}, -O-S(O)₂R^{10a} N(R^{20a})-S(O)₂R^{19a},
W^{a} Stickstoff oder CH,
U^{a} eine divalente Gruppe der Formel -X^{a}-(Y)ₙ-Z^{a}-,
X^{a} CR^{4a}R^{5a} oder N-R^{22a},
Y^{a} CR^{6a}R^{7a}, Carbonyl, Sauerstoff, Schwefel, N-R^{23a} oder C=CH₂,
Z^{a} CR^{8a}R^{9a}, N-R^{24a}, Sauerstoff oder Schwefel,
R^{4a}, R^{5a}, R^{6a}, R^{7a}, R^{8a} und R^{9a} unabhängig voneinander Wasserstoff, Halogen, Hydroxy, (C₁-C₄)-Alkyl, (C₁-C₄)-Alkylthio, [(C₁-C₄)-Alkoxy]-carbonyl, (C₃-C₆)-Cycloalkyl oder Phenyl, wobei die letztgenannten 5 kohlenwasserstoffhaltigen Reste unsubstituiert oder durch ein oder mehrere Halogenatome substituiert sind,
R^{10a} (C₁-C₄)-Alkyl, (C₁-C₄)-Halogenalkyl oder (C₁-C₄)-Alkoxy,
R^{11a} (C₁-C₄)-Alkyl, (C₁-C₄)-Halogenalkyl, Phenyl, substituiertes Phenyl, Benzyl oder NR^{17a}R^{18a}
R^{12a}, R^{13a} unabhängig voneinander Wasserstoff oder (C₁-C₄)-Alkyl,
R^{14a} Wasserstoff oder (C₁-C₄)-Alkyl,
R^{15a} Wasserstoff oder (C₁-C₄)-Alkyl,
R^{16a} Wasserstoff, (C₁-C₄)-Alkyl, (C₁-C₄)-Halogenalkyl oder (C₁-C₄)-Alkoxy,
R^{17a}, R^{18a} unabhängig voneinander Wasserstoff oder (C₁-C₄)-Alkyl,
R^{19a}, R^{20a} unabhängig voneinander (C₁-C₄)-Alkyl oder (C₁-C₄)-Halogenalkyl,
R^{21a}, R^{22a}, R^{23a} und R^{24a} unabhängig voneinander Wasserstoff oder (C₁-C₄)-Alkyl,und
m und p unabhängig voneinander null oder zwei
bedeuten.

6. Mittel nach einem der Ansprüche 1 bis 5, **dadurch gekennzeichnet, daß** in Formel A
R^{1a} und R^{3a} unabhängig voneinander Wasserstoff, Fluor, Chlor, Brom, lod, Cyano,Nitro, -SO₂R^{11a}, NR^{12a}R^{13a} -N(CH₃)-C(O)R^{15a}, [(C₁-C₄)-Alkoxy]-carbonyl, (C₁-C₂)-Alkyl, (C₁-C₂)-Alkoxy, OCH₂CH₂OR^{21a}, (C₁-C₂)-Halogenalkyl, (C₁-C₂)-Halogenalkoxy oder (C₁-C₂)-Alkylthio,
R^{2a} Fluor, Chlor, Brom, lod, Cyano, Nitro, S(O)ₚR^{10a}, (C₁-C₃)-Alkyl, (C₁-C₂)-Alkoxy, (C₁-C₃)-Halogenalkyl oder (C₁-C₂)-Halogenalkoxy,
U^{a} eine divalente Gruppe der Formel -X^{a}-(Y)ₙ-Z^{a}-,
W^{a} Stickstoff oder CH,
X^{a} CR^{4a}R^{5a} oder N-R^{22a},
Y^{a} CR^{6a}R^{7a}, Carbonyl, Sauerstoff, Schwefel. N-R^{23a} oder C=CH₂,
Z^{a} CR^{8a}R^{9a}, N-R^{24a}, Sauerstoff oder Schwefel,
R^{4a}, R^{5a}, R^{6a}, R^{7a}, R^{8a} und R^{9a} unabhängig voneinander Wasserstoff, Fluor, Chlor, Brom, Hydroxy (C₁-C₃)-Alkyl, (C₄-C₆)-Cycloalkyl, (C₁-C₂)-Alkylthio und Phenyl, wobei die letztgenannten 4 kohlenwasserstoffhaltigen Reste unsubstituiert oder durch ein oder mehrere Halogenatome substituiert sind und
R^{21a}, R^{22a}, R^{23a} und R^{24a} unabhängig voneinander (C₁-C₄)-Alkyl bedeuten.

7. Mittel nach einem der Ansprüche 1 bis 6, **dadurch gekennzeichnet, daß** in Formel A
R^{1a} und R^{3a} unabhängig voneinander Wasserstoff, Fluor, Chlor, Brom, Methoxy, Ethoxy, Methyl, Trifluormethoxy, Difluormethoxy, OCH₃CH₃OCH₃, Nitro, Trifluormethyl, Methylthio, -SO₂CH₃, SO₂CH₂CH₃, SO₂CH₂CH₂CH₃, SO₂CH₂Cl,-N(CH₃)₂, OCH₂CH₂Cl, OCH₂CF₃, SO₂N(CH₃)₂, Ethyl, n-Propyl oder [(C₁-C₄)-Alkoxy]-carbonyl,
R^{2a} Fluor, Chlor, Brom, lod, Cyano, Nitro, S(O)ₚR^{10a}, (C₁-C₃)-Alkyl, (C₁-C₂)-Alkoxy, (C₁-C₃)-Halogenalkyl oder (C₁-C₂)-Halogenalkoxy, und
R^{4a}, R^{5a}, R^{6a}, R^{7a}, R^{8a} und R^{9a} unabhängig voneinander Wasserstoff, Methyl, Ethyl, Propyl, Isopropyl, Cyclopentyl, Hydroxy, Methylthio, Fluor, Chlor, Brom und Phenyl, das gegebenenfalls durch ein oder mehrere Halogenatome substituiert ist,
bedeuten.

8. Mittel nach einem der Ansprüche 1 bis 7, **dadurch gekennzeichnet, daß** das Gewichtsverhältnis Safener B2 zu Herbizid A von 1 : 10 bis 10 : 1 ist.

9. Mittel nach Anspruch 8, **dadurch gekennzeichnet, daß** es 0,1 bis 99 Gewichtsprozent Wirkstoffe A und B2 und 1 bis 99,9 Gew.-% eines festen oder flüssigen Zusatzstoffes und 0 bis 25 Gew.-% eines Tensides enthält.

10. Verfahren zum Schutz von Kulturpflanzen vor phytotoxischen Nebenwirkungen von Herbiziden, **dadurch gekennzeichnet ist, daß** eine wirksame Menge einer oder mehrerer Verbindungen des in Anspruch 1 definierten Typs B2 vor, nach oder gleichzeitig mit dem Herbizid A nach Anspruch 1 auf die Pflanzen, Pflanzensamen oder die Anbaufläche appliziert wird.

11. Verfahren nach Anspruch 10, **dadurch gekennzeichnet, daß** der Safener B2 in einer Aufwandmenge von 0,001 bis 5 kg/ha Aktivsubstanz und einem Gewichtsverhältnis Safener:Herbizid von 1:10 bis 10:1 appliziert wird.

12. Verfahren nach Anspruch 10 oder 11, **dadurch gekennzeichnet, daß** die Kulturpflanzen Getreidepflanzen, Maispflanzen oder Reispflanzen sind.

13. Verwendung von Verbindungen B2 nach Anspruch 1 zum Schützen von Kulturpflanzen gegen phytotoxische Wirkungen der herbiziden Verbindungen der Formel A oder deren Salzen, wie sie in Anspruch 1 definiert sind.

## Claims

1. A herbicidal agent which comprises an active amount of
A) one or more herbicides selected from the group of the 2-acylated 1,3-dicarbonyl compounds of the formula A or salts thereof 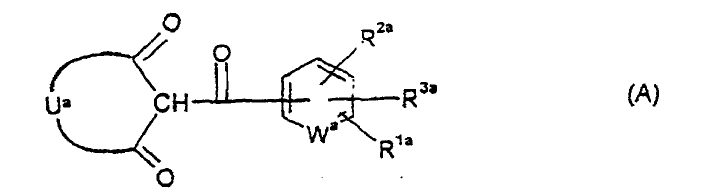 in which
R^{1a} and R^{3a} independently of one another are hydrogen, halogen, alkyl, alkoxy, haloalkyl, haloalkoxy, CN, NO₂, S(O)ₘR^{11a}, NR^{12a}R^{13a}, NR^{14a}C(O)R^{15a}, C(O)R^{16a} or OCH₂CH₂OR^{21a},
R^{2a} is halogen, CN, NO₂, alkyl, alkoxy, haloalkyl or haloalkoxy, S(O)ₚR^{10a}, -O-S(O)₂R^{10a}, N(R^{20a})-S(O)₂R^{19a},
W^{a} is nitrogen or CH,
R^{10a} is alkyl, haloalkyl or alkoxy,
R^{11a} is alkyl, haloalkyl, phenyl or benzyl, the last two radicals being unsubstituted or substituted on the phenyl ring, or is NR^{17a}R^{18a},
R^{12a}, R^{13a} independently of one another are hydrogen or alkyl,
R^{14a} is hydrogen or alkyl,
R^{15a} is hydrogen or alkyl,
R^{16a} is hydrogen, alkyl, haloalkyl or alkoxy,
R^{17a} and R^{18a} independently of one another are hydrogen or alkyl,
R^{19a} and R^{20a} independently of one another are alkyl or haloalkyl,
R^{21a} is hydrogen or alkyl,
m and p independently of one another are zero, one or two and
U^{a} and the group of the formula -CO-CH-CO- bonded to it together form a ring which has 5 to 6 ring members and which is carbocyclic or heterocyclic and, apart from the two oxo groups, not substituted or further substituted, and
B) one or more compounds of the formula B2, 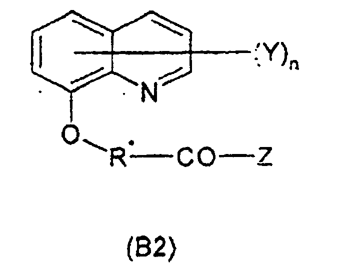 in which
Y is halogen, C₁-C₄-alkyl, C₁-C₄-alkoxy, nitro or C₁-C₄-haloalkyl,
R is a C₁-C₂-alkylene chain which can additionally be substituted by one or two C₁-C₄-alkyl radicals, and is preferably -CH₂-,
Z is OR¹, SR¹ or NR¹R, preferably a radical of the formula OR¹, NHR¹ or N(CH₃)R¹, in particular of the formula OR¹,
R independently of R¹ is hydrogen, C₁-C₆-alkyl, C₁-C₆-alkoxy or phenyl or substituted phenyl or
R and R¹ together with the nitrogen atom bonded to them are a saturated or unsaturated 3- to 7-membered heterocycle which has at least one nitrogen atom and up to 3 hetero atoms and which is unsubstituted or substituted by radicals selected from the group comprising C₁-C₄-alkyl, C₁-C₄-alkoxy, phenyl or substituted phenyl,
R¹ independently of R is hydrogen, C₁-C₁₈-alkyl, C₃-C₁₂-cycloalkyl, C₂-C₈-alkenyl or C₂-C₈-alkynyl, where each of the above carbon-containing radicals independently of one another is unsubstituted or mono- or polysubstituted by radicals selected from the group comprising halogen, hydroxyl, C₁-C₈-alkoxy, C₁-C₈-alkylthio, C₂-C₈-alkenylthio, C₂-C₈-alkynylthio, C₂-C₈-alkenyloxy, C₂-C₈-alkynyloxy, C₃-C₇-cycloalkyl, C₃-C₇-cycloalkoxy, cyano, mono- and di-(C₁-C₄-alkyl)-amino, (C₁-C₈-alkoxy)-carbonyl, (C₂-C₈-alkenyloxy)-carbonyl, (C₁-C₈-alkylthio)-carbonyl, (C₂-C₈-alkynyloxy)-carbonyl, (C₁-C₈-alkyl)-carbonyl, (C₂-C₈-alkenyl) -carbonyl, (C₂-C₈-alkynyl) -carbonyl, 1- (hydroxyimino) -C₁-C₆-alkyl, 1-(C₁-C₄-alkylimino)-C₁-C₆-alkyl, 1-(C₁-C₄-alkoxyimino) -C₁-C₆-alkyl, (C₁-C₈-alkyl) -carbonylamino, (C₂-C₈-alkenyl)-carbonylamino, (C₂-C₈-alkynyl)-carbonylamino, aminocarbonyl, (C₁-C₈-alkyl)-aminocarbonyl, di-(C₁-C₆-alkyl)-aminocarbonyl, (C₂-C₆-alkenyl)-aminocarbonyl, (C₂-C₆-alkynyl)-aminocarbonyl, (C₁-C₈-alkoxy)-carbonylamino, (C₁-C₈-alkyl)-aminocarbonylamino, C₁-C₆-alkylcarbonyloxy, which is unsubstituted or substituted by halogen, NO₂, C₁-C₄-alkoxy or optionally substituted phenyl, furthermore comprising (C₂-C₆-alkenyl)-carbonyloxy, (C₂-C₆-alkynyl) -carbonyloxy, C₁-C₈-alkylsulfonyl, phenyl, phenyl-C₁-C₆-alkoxy, phenyl-(C₁-C₆-alkoxy)-carbonyl, phenoxy, phenoxy-C₁-C₆-alkoxy, phenoxy-(C₁-C₆-alkoxy)-carbonyl, phenylcarbonyloxy, phenylcarbonylamino, phenyl-(C₁-C₆-alkyl)-carbonylamino, the 9 last-mentioned radicals being unsubstituted or mono- or polysubstituted in the phenyl ring by radicals selected from the group comprising halogen, C₁-C₄-alkyl, C₁-C₄-alkoxy, C₁-C₄-haloalkyl, C₁-C₄-haloalkoxy and nitro, and radicals of the formulae -SiR'₃, -O-SiR'₃, (R')₃Si-C₁-C₆-alkoxy, -CO-O-NR'₂, -O-N=CR'₂, -N=CR'₂, -O-NR'₂, -CH(OR')₂ and -O-(CH₂)ₘ-CH(OR')₂, in which the R' in the abovementioned formulae independently of one another are hydrogen, C₁-C₄-alkyl or phenyl which is unsubstituted or mono- or polysubstited by radicals selected from the group comprising halogen, C₁-C₄-alkyl, C₁-C₄-alkoxy, C₁-C₄-haloalkyl, C₁-C₄-haloalkoxy and nitro, or, as a pair, are a C₂-C₆-alkylene chain and m is 0 to 6, and an alkoxy radical of the formula R"O-CR" ' (OR")-C₁-C₆-alkoxy, in which the R" independently of one another are C₁-C₄-alkyl or together are a C₁-C₆-alkylene group and R"' is hydrogen or C₁-C₄-alkyl, and
n is an integer from 1 to 5.

2. A composition as claimed in claim 1, wherein
R¹ is hydrogen, C₁-C₁₂-alkyl, C₃-C₇-cycloalkyl, C₂-C₈-alkenyl or C₂-C₈-alkynyl,
where each of the abovementioned carbon-containing radicals independently of one another is unsubstituted or mono- or polysubstituted by halogen or mono- or disubstituted, preferably up to monosubstituted, by radicals selected from the group comprising hydroxyl, C₁-C₄-alkoxy, C₁-C₄-alkylthio, C₂-C₄-alkenyloxy, C₂-C₄-alkynyloxy, mono- and di- (C₁-C₂-alkyl) -amino, (C₁-C₄-alkoxy) -carbonyl, (C₂-C₄-alkenyloxy)-carbonyl, (C₂-C₄-alkynyloxy) -carbonyl, (C₁-C₄-alkyl)-carbonyl, (C₂-C₄-alkenyl) -carbonyl, (C₂-C₄-alkynyl) -carbonyl, 1- (hydroxyimino) -C₁-C₄-alkyl, 1-(C₁-C₄-alkylimino)-C₁-C₄-alkyl, 1-(C₁-C₄-alkoxyimino) -C₁-C₄-alkyl, C₁-C₄-alkylsulfonyl, phenyl, phenyl-C₁-C₄-alkoxy, phenyl-(C₁-C₄-alkoxy)-carbonyl, phenoxy, phenoxy-C₁-C₄-alkoxy, phenoxy-(C₁-C₄-alkoxy)-carbonyl, where the 6 last-mentioned radicals are unsubstituted or mono- or polysubstituted in the phenyl ring by radicals selected from the group comprising halogen, C₁-C₂-alkyl, C₁-C₂-alkoxy, C₁-C₂-haloalkyl, C₁-C₂-haloalkoxy and nitro, and radicals of the formulae -SiR'₃, -O-N=CR'₂, -N=CR'₂ and -O-NR'₂, in which the R' in the abovementioned formulae independently of one another are hydrogen, C₁-C₂-alkyl or phenyl which is unsubstituted or mono- or polysubstituted by radicals selected from the group comprising halogen, C₁-C₂-alkyl, C₁-C₂-alkoxy, C₁-C₂-haloalkyl, C₁-C₂-haloalkoxy and nitro, or, in pairs, are a C₄-C₅-alkylene chain.

3. A composition as claimed in claim 1 or 2, wherein
Y is halogen, methyl, ethyl, methoxy, ethoxy, or C₁-C₂-haloalkyl, preferably halogen or C₁-C₂-haloalkyl.

4. A composition as claimed in claim 1 or 2, wherein
Y is halogen or C₁-C₄-haloalkyl,
n is a number from 1 to 3,
Z is a radical of the formula OR¹,
R^{*} is CH₂ and
R¹ is hydrogen, C₁-C₈-alkyl, C₁-C₈-haloalkyl or (C₁-C₄-alkoxy) -C₁-C₄-alkyl, 1- (hydroxyimino)-C₁-C₄-alkyl, 1- (C₁-C₄-alkylimino) -C₁-C₃-alkyl, 1- (C₁-C₂-alkoxyimino) -C₁-C₃-alkyl.

5. A composition as claimed in any one of claims 1 to 4, wherein, in formula A,
R^{1a} and R^{3a} independently of one another are hydrogen, halogen, (C₁-C₄)-alkyl, (C₁-C₄)-alkoxy, (C₁-C₄)-haloalkyl, (C₁-C₃) -haloalkoxy, CN, NO₂, S(O)ₘR^{11a}, NR^{12a}R^{13a}, NR^{14a}C(O)R^{15a}, C(O)R^{16a}, OCH₂CH₂OR^{21a},
R^{2a} is halogen, CN, NO₂, (C₁-C₄)-alkyl, (C₁-C₄)-alkoxy, (C₁-C₄)-haloalkyl, (C₁-C₄)-haloalkoxy, S(O)ₚR^{10a}, -O-S(O)₂R^{10a}, N(R^{20a})-S(O)₂R^{19a},
W^{a} is nitrogen or CH,
U^{a} is a divalent group of the formula -X^{a}-(Y)ₙ-Z^{a}-,
X^{a} is CR^{4a}R^{5a} or N-R^{22a},
Y^{a} is CR^{6a}R^{7a}, carbonyl, oxygen, sulfur, N-R^{23a} or C=CH₂,
Z^{a} is CR^{8a}R^{9a}, N-R^{24a}, oxygen or sulfur,
R^{4a}, R^{5a}, R^{6a}, R^{7a}, R^{8a} and R^{9a} independently of one another are hydrogen, halogen, hydroxyl, (C₁-C₄)-alkyl, (C₁-C₄) -alkylthio, [(C₁-C₄) -alkoxy]-carbonyl, (C₃-C₆)-cycloalkyl or phenyl, where the 5 last-mentioned hydrocarbon-containing radicals are unsubstituted or substituted by one or more halogen atoms,
R^{10a} is (C₁-C₄)-alkyl, (C₁-C₄)-haloalkyl or (C₁-C₄)-alkoxy,
R^{11a} is (C₁-C₄)-alkyl, (C₁-C₄)-haloalkyl, phenyl, substituted phenyl, benzyl or NR^{17a}R^{18a},
R^{12a} and R^{13a} independently of one another are hydrogen or (C₁-C₄)-alkyl,
R^{14a} is hydrogen or (C₁-C₄)-alkyl,
R^{15a} is hydrogen or (C₁-C₄)-alkyl,
R^{16a} is hydrogen, (C₁-C₄)-alkyl, (C₁-C₄)-haloalkyl or (C₁-C₄)-alkoxy,
R^{17a} and R^{18a} independently of one another are hydrogen or (C₁-C₄) -alkyl,
R^{19a} and R^{20a} independently of one another are (C₁-C₄)-alkyl or (C₁-C₄) -haloalkyl,
R^{21a}, R^{22a}, R^{23a} and R^{24a} independently of one another are hydrogen or (C₁-C₄)-alkyl and
m and p independently of one another are zero or two.

6. A composition as claimed in any one of claims 1 to 5, wherein, in formula A
R^{1a} and R^{3a} independently of one another are hydrogen, fluorine, chlorine, bromine, iodine, cyano, nitro, -SO₂R^{11a}, NR^{12a}R^{13a}, -N (CH₃) -C(O)R^{15a}, [(C₁-C₄) -alkoxy]-carbonyl, (C₁-C₂)-alkyl, (C₁-C₂)-alkoxy, OCH₂CH₂-OR^{21a}, (C₁-C₂)-haloalkyl, (C₁-C₂)-haloalkoxy or (C₁-C₂)-alkylthio,
R^{2a} is fluorine, chlorine, bromine, iodine, cyano, nitro, S(O)ₚR^{10a}, (C₁-C₃)-alkyl, (C₁-C₂)-alkoxy, (C₁-C₃)-haloalkyl or (C₁-C₂)-haloalkoxy,
U^{a} is a divalent group of the formula -X^{a}-(Y)ₙ-Z^{a}-,
W^{a} is nitrogen or CH,
X^{a} is CR^{4a}R^{5a} or N-R^{22a}
Y^{a} is CR^{6a}R^{7a}, carbonyl, oxygen, sulfur, N-R^{23a} or C=CH₂,
Z^{a} is CR^{8a}R^{9a}, N-R^{24a}, oxygen or sulfur,
R^{4a}, R^{5a}, R^{6a}, R^{7a}, R^{8a} and R^{9a} independently of one another are hydrogen, fluorine, chlorine, bromine, hydroxyl, (C₁-C₃)-alkyl, (C₄-C₆)-cycloalkyl, (C₁-C₂)-alkylthio and phenyl, the 4 last-mentioned hydrocarbon-containing radicals being unsubstituted or substituted by one or more halogen atoms, and
R^{21a}, R^{22a}, R^{23a} and R^{24a} independently of one another are (C₁-C₄)-alkyl.

7. A composition as claimed in any one of claims 1 to 6, wherein, in formula A,
R^{1a} and R^{3a} independently of one another are hydrogen, fluorine, chlorine, bromine, methoxy, ethoxy, methyl, trifluoromethoxy, difluoromethoxy, OCH₃CH₃OCH₃, nitro, trifluoromethyl, methylthio, -SO₂CH₃, SO₂CH₂CH₃, SO₂CH₂CH₂CH₃, SO₂CH₂Cl, -N(CH₃)₂, OCH₂CH₂Cl, OCH₂CF₃, SO₂N(CH₃)₂, ethyl, n-propyl or [(C₁-C₄) -alkoxy] -carbonyl,
R^{2a} is fluorine, chlorine, bromine, iodine, cyano, nitro, S(O)ₚR^{10a}, (C₁-C₃)-alkyl, (C₁-C₂)-alkoxy, (C₁-C₃)-haloalkyl or (C₁-C₂)-haloalkoxy, and
R^{4a}, R^{5a}, R^{6a}, R^{7a}, R^{8a} and R^{9a} independently of one another are hydrogen, methyl, ethyl, propyl, isopropyl, cyclopentyl, hydroxyl, methylthio, fluorine, chlorine, bromine and phenyl which is optionally substituted by one or more halogen atoms

8. A composition as claimed in any one of claims 1 to 7, wherein the ratio by weight of safener B2 to herbicide A is from 1:10 to 10:1.

9. A composition as claimed in claim 8, which comprises 0.1 to 99 percent by weight of active substances A and B2 and 1 to 99.9% by weight of a solid or liquid additive and 0 to 25% by weight of a surfactant.

10. A method for protecting crop plants against phytotoxic secondary effects of herbicides, which comprises applying an effective amount of one or more compounds of the type B2 defined in claim 1, before, after or simultaneously with, the herbicide A as claimed in claim 1 to the plants, seeds of the plants or the area under cultivation.

11. The process as claimed in claim 10, wherein the safener B is applied at an application rate of 0.001 to 5 kg/ha of active substance and at a ratio by weight of safener:herbicide of 1:10 to 10:1.

12. The process as claimed in claim 10 or 11, wherein the crop plants are cereal plants, maize plants or rice plants.

13. The use of compounds B2 as claimed in claim 1, for protecting crop plants against phytotoxic effects of the herbicidal compounds of the formula A or salts thereof, as they are defined in claim 1.

## Revendications

1. Composés herbicides, **caractérisés en ce qu'**ils contiennent
A) un ou plusieurs herbicides choisis parmi les composés 1,3-dicarbonyle 2-acylés de formule A ou leurs sels, 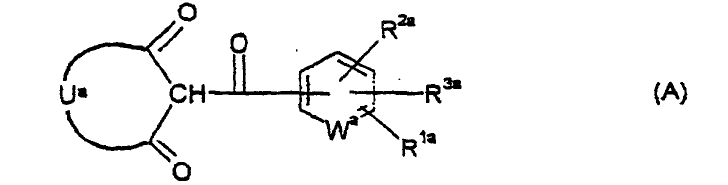 dans laquelle
R^{1a} et R^{3a} représentent indépendamment l'un de l'autre un atome d'hydrogène, d'halogène, un groupe alkyle, alcoxy, halogénoalkyle, halogénoalcoxy, CN, NO₂, S(O)ₘR^{11a}, NR^{12a}R^{13a}, NR^{14a}C(O)R^{15a}, C(O)R^{16a} ou OCH₂CH₂OR^{21a},
R^{2a} représente un atome d'halogène, CN, NO₂, un groupe alkyle, alcoxy, halogénoalkyle ou halogénoalcoxy, S(O)ₚR^{10a}, -O-S(O)₂R^{10a}, N(R^{20a})-S(O)₂R^{19a},
W^{a} représente un atome d'azote ou CH,
R^{10a} représente un groupe alkyle, halogénoalkyle ou alcoxy,
R^{11a} représente un groupe alkyle, halogénoalkyle, phényle ou benzyle, dans lequel les deux derniers groupes sont non substitués sur le cycle phényle ou substitués, ou NR^{17a}R^{18a},
R^{12a}, R^{13a} représentent indépendamment l'un de l'autre un atome d'hydrogène ou un groupe alkyle,
R^{14a} représente un groupe alkyle ou un atome d'hydrogène,
R^{15a} représente un groupe alkyle ou un atome d'hydrogène,
R^{16a} représente un atome d'hydrogène, un groupe alkyle, halogénoalkyle ou alcoxy,
R^{17a}, R^{18a} représentent indépendamment l'un de l'autre un atome d'hydrogène ou un groupe alkyle,
R^{19a}, R^{20a} représentent indépendamment l'un de l'autre un groupe alkyle ou halogénoalkyle,
R^{21a} représente un atome d'hydrogène ou un groupe alkyle,
m et p représentent indépendamment zéro, un ou deux et
U^{a} et les groupes de formule -CO-CH-CO- qui lui sont liés forment ensemble un cycle à 5 à 6 chaînons, qui est carbocyclique ou hétérocyclique, et en plus des deux groupes oxo est non substitué ou est encore substitué et
B) un ou plusieurs composés de formule B2 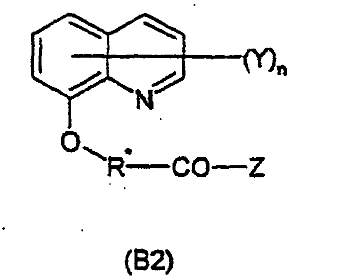 dans laquelle
Y représente un atome d'halogène, un groupe alkyle en C₁ à C₄, alcoxy en C₁ à C₄, nitro ou halogénoalkyle en C₁ à C₄,
R* est une chaîne alkylène en C₁ à C₂, qui peut encore être substituée par un ou deux groupes alkyle en C₁ à C₄, de préférence -CH₂-,
Z représente OR¹, SR¹ ou NR¹R, de préférence un groupe de formule OR¹, NHR¹ ou N(CH₃)R¹, en particulier de formule OR¹,
R est indépendamment de R¹ un atome d'hydrogène, un groupe alkyle en C₁ à C₆, alcoxy en C₁ à C₆ ou phényle ou phényle substitué, ou
R et R¹ représentent ensemble avec l'atome d'azote auquel ils sont liés un hétérocycle saturé ou insaturé à 3 à 7 chaînons ayant au moins un atome N et jusqu'à 3 hétéroatomes, qui est non substitué ou substitué par des groupes choisis parmi un groupe alkyle en C₁ à C₄, alcoxy en C₁ à C₄, phényle ou phényle substitué,
R¹ représente indépendamment de R un atome d'hydrogène, un groupe alkyle en C₁ à C₁₈, cycloalkyle en C₃ à C₁₂, alcényle en C₂ à C₈ ou alcynyle en C₂ à C₈,
dans lesquels chacun des groupes carbonés précédents, indépendamment les uns des autres, est non substitué ou substitué une ou plusieurs fois par des groupes choisis parmi un atome d'halogène, un groupe hydroxy, alcoxy en C₁ à C₈, alkylthio en C₁ à C₈, alkylthio en C₁ à C₈, alcénylthio en C₂ à C₈, alcynylthio en C₂ à C₈, alcényloxy en C₂ à C₈, alcynyloxy en C₂ à C₈, cycloalkyle en C₃ à C₇, cycloalcoxy en C₃ à C₇, cyano, mono- et di-(alkyle en C₁ à C₄)-amino, (alcoxy en C₁ à C₈)-carbonyle, (alcényloxy en C₂ à C₈)-carbonyle, (alkylthio en C₁ à C₈)-carbonyle, (alcynyloxy en C₁ à C₈)-carbonyle, (alkyle en C₁ à C₈)-carbonyle, (alcényle en C₂ à C₈)-carbonyle, (alcynyle en C₂ à C₈)-carbonyle, 1-(hydroxyimino)-alkyle en C₁ à C₃, 1-(alkylimino en C₁ à C₄) - alkyle en C₁ à C₆, 1-(alcoxyimino en C₁ à C₄)-alkyle en C₁ à C₈, (alkyle en C₁ à C₈)-carbonylamino, (alcényle en C₂ à C₈)-carbonylamino, (alcynyle en C₂ à C₈)-carbonylamino, aminocarbonyle, (alkyle en C₁ à C₈)-aminocarbonyle, di-(alkyle en C₁ à C₆)-aminocarbonyle, (alcényle en C₂ à C₆)-aminocarbonyle, (alcynyle en C₂ à C₆)-aminocarbonyle, (alcoxy en C₁ à C₈)-carbonylamino, (alkyle en C₁ à C₈)-aminocarbonylamino, alkyle en C₁ à C₆-carbonyloxy, qui est non substitué ou substitué par un atome d'halogène, NO₂, un groupe alcoxy en C₁ à C₄ ou phényle éventuellement substitué, (alcényle en C₂ à C₆)-carbonyloxy, (alcynyle en C₂ à C₆)-carbonyloxy, alkylsulfonyle en C₁ à C₈, phényle, phénylalcoxy en C₁ à C₆, phényl-(alcoxy en C₁ à C₆)-carbonyle, phénoxy, phénoxy-alcoxy en C₁ à C₆, phénoxy-(alcoxy en C₁ à C₆)-carbonyle, phénylcarbonyloxy, phénylcarbonylamino, phényl-(alkyle en C₁ à C₆)-carbonylamino, dans lesquelles les 9 groupes cités en dernier sont non substitués dans le cycle phényle ou substitués une ou plusieurs fois par des groupes choisis parmi un atome d'halogène, un groupe alkyle en C₁ à C₄, alcoxy en C₁ à C₄, halogénoalkyle en C₁ à C₄, halogénoalcoxy en C₁ à C₄ et nitro, et les groupes des formules -SiR'₃, -OSiR'₃, - (R')₃Si-alcoxy en C₁ à C₈,-CO-O-NR'₂, -O-N=CR'₂, -N=CR'₂, -O-NR'₂, -CH(OR')₂ et -O-(CH₂)ₘ-CH(OR')₂, dans lesquelles les R' dans les formules citées représentent indépendamment les uns des autres un atome d'hydrogène, un groupe alkyle en C₁ à C₄ ou phényle, qui est non substitué ou substitué une ou plusieurs fois par des groupes choisis parmi un atome d'halogène, un groupe alkyle en C₁ à C₄, alcoxy en C₁ à C₄-halogénoalkyle en C₁ à C₄, halogénoalcoxy en C₁ à C₄ et nitro, ou représente partiellement une chaîne alkylène en C₂ à C₆ et m = 0 à 6, et un groupe alcoxy de formule R"O-CR" ' (OR" ')-alcoxy en C₁ à C₈, dans laquelle les R" représentent indépendamment les uns des autres un groupe alkyle en C₁ à C₄ ou ensemble un groupe alkylène en C₁ à C₈ et les R" ' représentent un atome d'hydrogène ou un groupe alkyle en C₁ à C₄, et
n est un nombre entier de 1 à 5,
en une quantité efficace.

2. Agents selon la revendication 1, **caractérisés en ce que**
R¹ est un atome d'hydrogène, un groupe alkyle en C₁ à C₁₂, cycloalkyle en C₃ à C₇, alcényle en C₂ à C₈ ou alcynyle en C₂ à C₈, dans lequel chacun des groupes carbonés précédents sont indépendamment les uns des autres non substitués ou une ou plusieurs fois substitués par un atome d'halogène ou une ou deux fois, de préférence jusqu'à une fois par des groupes choisis parmi un groupe hydroxy, alcoxy en C₁ à C₄, alkylthio en C₁ à C₄, alcényloxy en C₂ à C₄, alcynyloxy en C₂ à C₄, mono- et di-(alkyle en C₁ à C₂)-amino, (alcoxy en C₁ à C₄)-carbonyle, (alcényloxy en C₂ à C₄)-carbonyle, (alcynyloxy en C₂ à C₄)-carbonyle, (alcényle en C₂ à C₄)-carbonyle, (alcynyle en C₂ à C₄)-carbonyle, 1-(hydroxyimino)-alkyle en C₁ à C₄, 1-(alkylimino en C₁ à C₄)-alkyle en C₁ à C₄, 1-(alcoxyimino en C₁ à C₄)-alkyle en C₁ à C₄, alkylsulfonyle en C₁ à C₄, phényle, phénylalcoxy en C₁ à C₄, phényl-(alcoxy en C₁ à C₄)-carbonyle, phénoxy, phénoxy-alcoxy en C₁ à C₄, phénoxy- (alcoxy en C₁ à C₄) -carbonyle, dans lesquelles les 6 derniers groupes mentionnés sont non substitués dans le cycle phényle ou substitués une ou plusieurs fois par des groupes choisis parmi un atome d'halogène, un groupe alkyle en C₁ à C₂, alcoxy en C₁ à C₂, halogénoalkyle en C₁ à C₂, halogénoalcoxy en C₁ à C₂ et nitro, et les groupes des formules -SiR'₃, -O-N=CR'₂, -N=CR'₂ et -O-NR'₂, dans lesquelles les R' dans les formules citées représentent indépendamment les uns des autres un atome d'hydrogène, un groupe alkyle en C₁ à C₂ ou un groupe phényle, qui est non substitué ou est une ou plusieurs fois substitué par des groupes choisis parmi un atome d'halogène, un groupe alkyle en C₁ à C₂, alcoxy en C₁ à C₂, halogénoalkyle en C₁ à C₂, halogénoalcoxy en C₁ à C₂ et nitro, ou représentent partiellement une chaîne alkylène en C₄ à C₅.

3. Agents selon la revendication 1 ou 2, **caractérisés en ce que**
Y représente un atome d'halogène, un groupe méthyle, éthyle, méthoxy, éthoxy ou halogénoalkyle en C₁ à C₂, de préférence un atome d'halogène ou un groupe halogénoalkyle en C₁ à C₂.

4. Agents selon la revendication 1 ou 2, **caractérisés en ce que**
Y représente un atome d'halogène ou un groupe halogénoalkyle en C₁ à C₄,
n un nombre de 1 à 3,
Z représente un groupe de formule OR¹,
R* représente CH₂ et
R¹ représente un atome d'hydrogène, un groupe alkyle en C₁ à C₈, halogénoalkyle en C₁ à C₈ ou (alcoxy en C₁ à C₄)-alkyle en C₁ à C₄, 1- (hydroxyimino)-alkyle en C₁ à C₄, 1-(alkylimino en C₁ à C₄)-alkyle en C₁ à C₃, 1-(alcoxyimino en C₁ à C₂)-alkyle en C₁ à C₃.

5. Agents selon l'une des revendications 1 à 4, **caractérisés en ce que** dans la formule A
R^{1a} et R^{3a} représentent indépendamment l'un de l'autre un atome d'hydrogène, d'halogène, un groupe alkyle en C₁ à C₄, alcoxy en C₁ à C₄, halogénoalkyle en C₁ à C₄, halogénoalcoxy en C₁ à C₃, CN, NO₂, S(O)ₘR^{11a}, NR^{12a}R^{13a} , NR^{14a}C(O) R^{15a}, C(O)R^{16a}, OCH₂CH₂OR^{21a},
R^{2a} représente un atome d'halogène, un groupe CN, NO₂, alkyle en C₁ à C₄, alcoxy en C₁ à C₄, halogénoalkyle en C₁ à C₄, halogénoalcoxy en C₁ à C₄, S(O)ₚR^{10a}, -O-S(O)₂R^{10a}, N(R^{20a}) -S(O)₂R^{19a},
W^{a} représente un atome d'azote ou un groupe CH,
U^{a} représente un groupe divalent de formule -X^{a}-(Y)ₙ-Z^{a}-,
X^{a} représente CR^{4a}R^{5a} ou N-R^{22a},
Y^{a} représente CR^{6a}R^{7a}, un groupe carbonyle, un atome d'azote, de soufre, N-R^{23a} ou C=CH₂,
Z^{a} représente CR^{8a}R^{9a}, N-R^{24a}, un atome d'azote ou de soufre,
R^{4a}, R^{5a}, R^{6a}, R^{7a}, R^{8a} et R^{9a} représentent indépendamment les uns des autres un atome d'hydrogène, d'halogène, un groupe hydroxy, alkyle en C₁ à C₄, alkylthio en C₁ à C₄, (alcoxy en C₁ à C₄)-carbonyle, cycloalkyle en C₃ à C₆ ou phényle, dans lequel les 5 derniers groupes hydrocarbonés mentionnés sont non substitués ou substitués par un ou plusieurs atomes d'halogène,
R^{10a} représente un groupe alkyle en C₁ à C₄, halogénoalkyle en C₁ à C₄ ou alcoxy en C₁ à C₄,
R^{11a} représente un groupe alkyle en C₁ à C₄, halogénoalkyle en C₁ à C₄, phényle, phényle substitué, benzyle ou NR^{17a}R^{18a},
R^{12a}, R^{13a} représentent indépendamment l'un de l'autre un atome d'hydrogène ou un groupe alkyle en C₁ à C₄,
R^{14a} représente un atome d'hydrogène ou un groupe alkyle en C₁ à C₄,
R^{15a} représente un atome d'hydrogène ou un groupe alkyle en C₁ à C₄,
R^{16a} représente un atome d'hydrogène, un groupe alkyle en C₁ à C₄, halogénoalkyle en C₁ à C₄ ou alcoxy en C₁ à C₄,
R^{17a}, R^{18a} représentent indépendamment l'un de l'autre un atome d'hydrogène ou un groupe alkyle en C₁ à C₄,
R^{19a}, R^{20a} représentent indépendamment l'un de l'autre un groupe alkyle en C₁ à C₄ ou halogénoalkyle en C₁ à C₄,
R^{21a}, R^{22a}, R^{23a} et R^{24a} représentent indépendamment l'un de l'autre H ou un groupe alkyle en C₁ à C₄ et
m et p représentent indépendamment l'un de l'autre zéro ou deux.

6. Agents selon l'une des revendications 1 à 5, **caractérisés en ce que** dans la formule A
R^{1a} et R^{3a} représentent indépendamment l'un de l'autre un atome d'hydrogène, de fluor, de chlore, de brome, d'iode, un groupe cyano, nitro, -SO₂R^{11a}, NR^{12a}R^{13a}, -N(CH₃)-C(O)R^{15a}, (alcoxy en C₁ à C₄)-carbonyle, alkyle en C₁ à C₂, alcoxy en C₁ à C₂, OCH₂CH₂OR^{21a}, halogénoalkyle en C₁ à C₂, halogénoalcoxy en C₁ à C₂ ou alkylthio en C₁ à C₂,
R^{2a} représente un atome de fluor, de chlore, de brome, d'iode, un groupe cyano, nitro, S(O)ₚR^{10a}, un groupe alkyle en C₁ à C₃, alcoxy en C₁ à C₂, halogénoalkyle en C₁ à C₃ ou halogénoalcoxy en C₁ à C₂,
U^{a} représente un groupe divalent de formule -X^{a}-(Y)ₙ-Z^{a}-,
W^{a} représente un atome d'azote ou un groupe CH,
X^{a} représente CR^{4a}R^{5a} ou N-R^{22a},
Y^{a} représente CR^{6a}R^{7a}, un groupe carbonyle, un atome d'azote, de soufre, N-R^{23a} ou C=CH₂,
Z^{a} représente CR^{8a}R^{9a}, N-R^{24a}, un atome d'oxygène ou de soufre,
R^{4a}, R^{5a}, R^{6a}, R^{7a}, R^{8a} et R^{9a} représentent indépendamment les uns des autres un atome d'hydrogène, de fluor, de chlore, de brome, un groupe hydroxy, alkyle en C₁ à C₃, cycloalkyle en C₄ à C₆, alkylthio en C₁ à C₂ et phényle, dans lequel les 4 derniers groupes hydrocarbonés mentionnés sont non substitués ou substitués par un ou plusieurs atomes d'halogène et
R^{21a}, R^{22a}, R^{23a} et R^{24a} représentent indépendamment l'un de l'autre un groupe alkyle en C₁ à C₄.

7. Agents selon l'une des revendications 1 à 6, **caractérisés en ce que** dans la formule A
R^{1a} et R^{3a} représentent indépendamment l'un de l'autre un atome d'hydrogène, de fluor, de chlore, de brome, un groupe méthoxy, éthoxy, méthyle, trifluorométhoxy difluorométhoxy, OCH₃CH₃OCH₃, nitro, trifluorométhyle, méthylthio, -SO₂CH₃, SO₂CH₂CH₃, SO₂CH₂CH₂CH₃, SO₂CH₂Cl, -N(CH₃)₂, OCH₂CH₂Cl, OCH₂CF₃, SO₂N(CH₃)₂, éthyle, n-propyle ou (alcoxy en C₁ à C₄)-carbonyle
R^{2a} représente un atome de fluor, de chlore, de brome, d'iode, un groupe cyano, nitro, S(O)ₚR^{10a}, un groupe alkyle en C₁ à C₃, alcoxy en C₁ à C₂, halogénoalkyle en C₁ à C₃ ou halogénoalcoxy en C₁ à C₂,
R^{4a}, R^{5a}, R^{6a}, R^{7a}, R^{8a} et R^{9a} représentent indépendamment les uns des autres un atome d'hydrogène, un groupe méthyle, éthyle, propyle, isopropyle, cyclopentyle, hydroxy, méthylthio, un atome de fluor, de chlore de brome et un groupe phényle, qui est éventuellement substitué par un ou plusieurs atomes d'halogène.

8. Agent selon l'une des revendications 1 à 7, **caractérisé en ce que** le rapport en poids de l'antidote B2 sur l'herbicide A est de 1 : 10 à 10 : 1.

9. Agent selon la revendication 8, **caractérisé en ce qu'**il contient de 0,1 à 99 pour cent en poids de substances actives A et B2 et de 1 à 99,9% en poids d'un additif solide ou liquide et de 0 à 25% en poids d'un agent tensioactif.

10. Procédé pour la protection de plantes cultivées contres les effets phytotoxiques secondaires d'herbicides, **caractérisé en ce qu'**on applique une quantité efficace d'un ou de plusieurs composés du type B2 défini à la revendication 1 avant, après ou en même temps que l'herbicide A selon la revendication 1 sur les plantes, les semences de plantes ou les surfaces agricoles.

11. Procédé selon la revendication 10, **caractérisé en ce qu'**on applique l'antidote B2 en une quantité mise en oeuvre de 0,001 à 5 kg/ha de substance active et un rapport en poids antidote : herbicide de 1 : 10 à 10 : 1.

12. Procédé selon la revendication 10 ou 11, **caractérisé en ce que** les plantes cultivées sont des plantes de céréales, des plantes de maïs ou des plantes de riz.

13. Utilisation de composés B2 selon la revendication 1 pour la protection de plantes cultivées contre les effets phytotoxiques des composés herbicides de formule A ou de leurs sels, comme ils sont définis dans la revendication 1.
